# EUROPEAN PATENT SPECIFICATION

(11) **EP 4 343 212 B1**
(45) Date of publication and mention of the grant of the patent: **04.06.2025**
(21) Application number: 23198414.7
(22) Date of filing: 20.09.2023
(51) Int. Cl.: F24C 15/32

(54) **Water supply device and steam supply device and cooking appliance provided therewith**
Wasserversorgungsvorrichtung und Dampfversorgungsvorrichtung und damit versehenes Kochgerät
Dispositif d'alimentation en eau et dispositif d'alimentation en vapeur et appareil de cuisson muni de ce dispositif

(30) Priority: 23.09.2022 KR 20220120625
(43) Date of publication of application: 27.03.2024
(60) Divisional application: 25171705.4
(73) Proprietor: LG Electronics Inc., Yeongdeungpo-gu Seoul 07336 (KR)
(72) Inventor: SHIN, Jangmo, Seoul 08592 (KR); LEE, Jeonghyun, Seoul 08592 (KR); HWANG, Hansaem, Seoul 08592 (KR); KIM, Janghoon, Seoul 08592 (KR); YEO, Chan-Yong, Seoul 08592 (KR)
(74) Representative: Vossius & Partner Patentanwälte Rechtsanwälte mbB

(56) References cited:
- EP-A1- 3 486 572
- US-A1- 2020 003 426

## Description

The present invention relates to a water supply device, and a steam supply device and a cooking appliance comprising the same, and in particular, a water supply device that is provided to supply water used to generate steam, and a steam supply device and a cooking appliance that comprise the same.

### BACKGROUND

Cooking appliances are installed in the kitchen and used to cook food items as the user wants. Cooking appliances can fall into different categories, based on a heat source or a type, and the sort of fuel.

Cooking appliances can be categorized into open cooking appliances and sealed cooking appliances, depending on the shape of a space where a food item is placed. Sealed cooking appliance comprise an oven, a microwave oven and the like, and open cooking appliances comprise a cooktop, a hob and the like.

In a sealed cooking appliance, a space in which a food item is placed is shielded, and the shielded space is heated to cook the food item. The sealed cooking appliance is provided with a cooking compartment in which a food item is placed and which is shielded when a food item is cooked. The cooking compartment is a space in which a food item is substantially cooked, in the cooking appliance.

Sealed cooking appliances can be categorized into gas ovens and electric ovens based on the type of a heat source.

Gas ovens use gas as a fuel and cook a food item by using flames or heat that are generated by supplying gas to a burner and igniting the burner.

Unlike gas ovens, electric ovens use electricity as a heat source and cook a food item by using heat that is emitted from a heater operating with electricity.

In recent years, steam ovens cooking a food item by using high-temperature steam have come on the market.

Steam ovens spray high-temperature steam into a cooking compartment. In the case of a steam oven that supplies steam into a cooking compartment, the steam oven can provide a function of adjusting humidity in the cooking compartment.

Ordinarily, a steam oven can comprise a cavity forming a cooking compartment, and a stem supply part supplying steam into the cooking compartment.

The steam supply part can comprise a steam generator generating steam, and a water tank supplying water to the steam generator. A water supply pipe can connect between the water tank and the steam generator, to move water in the water tank to the steam generator.

Additionally, the steam generator can comprise a water storage part accommodating water that is supplied from the water tank, and a heater heating water in the water storage part and generating steam.

In the above-described steam oven, water injected through the water tank flows into the water storage part through the water supply pipe, and the water having flown into the water storage part is heated by the heater, to generate steam. The steam generated can flow into the cooking compartment and heat a food item while circulating in the cooking compartment.

In the above-described steam oven, the water tank is provided in the form of a simple container that accommodates water. That is, in a conventional steam oven, a water tank provides a simple function of accommodating and supplying water, without providing another function in relation to improvement in user convenience.

US 2020/003426 A1 relates to a water supply device, and a steam supply device and a cooking device including the same. The device comprises a housing installed in a body of a cooking device; a water tank having a storage space formed therein to store water, wherein the water tank is installed at the housing to be movable between an insertion position at which the inlet port is located in the receiving space and a withdrawal position in which the inlet port is exposed to the outside of the receiving space; and a connector which is installed at the housing so as to be movable in a longitudinal direction inside the receiving space, and moves in the longitudinal direction to move the water tank to the insertion position or the withdrawal position.

EP 3 486 572 A1 relates to another household appliance which comprises a liquid tank, wherein the tank is adapted for translational movement between a use position in which the tank is positioned within a housing of the household appliance and a servicing position in which the tank is at least partially extracted from the housing.

### SUMMARY

### Technical Problems

The object of the present invention is to provide a water supply device that can provide a variety of functions to improve user convenience.

The object of the present invention is to provide a water supply device that can have an improved structure ensuring ease of manufacturing and repairs.

These objects are achieved with the features of independent claim 1. Preferred aspects are defined in the dependent claims.

A water supply device according to the invention comprises a housing having a front surface that is open; a slider being accommodated in the housing in a way that the slider is movable in a front-rear direction; a water tank being installed in the housing in a way that the water tank comes in and out of the housing in the front-rear direction, and connecting to the slider that moves forward to move forward together with the slider; a fixation part fixing the slider to prevent the slider from moving forward; and a speed-reduction inducing member..

According to the present invention, the water tank is provided apart from the slider in a way that the water tank is movable in the front-rear direction, relative to the slider.

Preferably, the slider comprises a rear surface frame being disposed at a rear side of the water tank, and the rear surface frame and a rear surface of the water tank are disposed to touch each other in the font-rear direction.

Preferably, as the slider moves forward, the rear surface frame may push and move the water tank forward, and as the water tank moves rearward, the water tank may push and move the rear surface frame rearward.

According to the present invention, the water supply device comprises the speed-reduction inducing member being disposed at the slider, and interfering with a front-rear movement of the water tank that connects to the slider.

According to the present invention, at least a portion of the water tank is inserted into the slider, such that the water tank connects to the slider, and the speed-reduction inducing member closely contacts a lateral surface of the water tank being inserted into the slider and generates a frictional force interfering with movement of the water tank, relative to the slider.

Preferably, the slider may further comprise a pair of lateral surface frames respectively extending forward from the rear surface frame and being respectively disposed to face a lateral surface of the water tank.

Preferably, at least a portion of the water tank is inserted into a space being surrounded by the rear surface frame and the pair of lateral surface frames.

The housing may comprise a bottom surface part being disposed at a lower side of the water tank; a lateral surface part protruding upward from the bottom surface part and being disposed in a lateral portion of the water tank; and a guide surface part extending in a direction where the guide surface part becomes far from the bottom surface part and being disposed at an upper side of the bottom surface part, while extending from the lateral surface part in a lateral direction.

Preferably, the guide surface part supports the lateral surface frame at a lower side of the slider, in a way that the lateral surface frame is movable in the front-rear direction.

Preferably, a pair of speed-reduction inducing members is spaced from each other in a lateral direction with the water tank therebetween, and, more preferably, each speed-reduction inducing member is disposed at the lateral surface frame.

According to the present invention, the speed-reduction inducing member comprises a pair of rollers being spaced from each other and disposed at the lateral surface frame in a way that the rollers rotate around an up-down axis.

According to the present invention, the rollers contact a lateral surface of the water tank closely, and generate the frictional force interfering with movement of the water tank.

The slider may comprise a rear surface frame being disposed at a rear side of the water tank, and a fixation projection protruding rearward from the rear surface frame.

Preferably, the fixation part is disposed at a rear side of the slider and coupled to the fixation projection.

Preferably, a pop-up member providing power for moving the slider is separated from the fixation part, forward. The pop-up member is disposed between the slider and the rear surface cover and elastically supports the slider at the rear side of the slider.

The slider may comprise a rear surface frame being disposed at a rear side of the water tank, and a guide projection protruding rearward from the rear surface frame.

The pop-up member may comprise a coil spring being provided in a way that the pop-up member is elastically deformable in the front-rear direction and being disposed between the rear surface cover and the rear surface frame.

Preferably, the guide projection is fitted into the coil spring while passing through the coil spring in the front-rear direction.

Preferably, the guide projection is coupled to the housing in a way that the guide projection is movable in the front-rear direction, while passing through the rear surface cover in the front-rear direction.

A steam supply device in another aspect of the present invention may comprise a steam generator operating to heat water and generate steam; and the water supply supplying water to be supplied to the steam generator.

A cooking appliance in another aspect of the present invention may comprise a main body having a cooking compartment therein; and the steam supply device being installed in the main body and supplying steam into the cooking compartment.

### Advantageous Effects

In the water supply device of the present invention, and the steam supply device and the cooking appliance comprising the water supply device, one water supply device may provide a variety of functions comprising a function of fixing the water tank to the inside of the main body or drawing the water tank from the main body simply based on a press, a function of controlling the operation of the steam supply device depending on the position of the water tank, a function of providing a smooth touch to allow the water tank to be drawn smoothly and the like, thereby enhancing user convenience effectively.

In the present invention, the water tank and the slider are provided as an individual component such that the water tank and the slider may connect in a separable manner, and the water tank may be movably installed in the housing through the slider.

The water supply device of the present invention may ensure a reduction in the manufacturing costs of a water supply device and improvement in the manufacturability of a water supply device, ensure ease of repairs of a water supply device and a decrease in repair costs of a water supply device, and ease of separation of a water tank for a wash or repairs and the like.

In the present invention, the steam heater may be prevented from operating unnecessarily in the state where water cannot be supplied, thereby preventing waste of power and an accident caused by overheating of the steam heater.

### BRIEF DESCRIPTION OF DRAWINGS

The accompanying drawings constitute a part of the specification, illustrate one or more embodiments of the invention, and together with the specification, explain the invention, wherein:
FIG. 1 is a perspective view showing a cooking appliance of one embodiment;
FIG. 2 is a lateral cross-sectional view showing the inner structure of the cooking appliance of FIG. 1;
FIG. 3 is a perspective view showing the cooking appliance of FIG. 1 with a cooking compartment open;
FIG. 4 is a perspective view showing the cooking appliance of FIG. 1 with a control panel open;
FIG. 5 is a plan view showing the inner structure of an electronic component compartment of the cooking appliance of FIG. 1;
FIG. 6 is a block diagram showing the configuration of a steam supply device of one embodiment;
FIG. 7 is a perspective view showing a water supply device of one embodiment;
FIG. 8 is a perspective view showing that a water tank of the water supply device of FIG. 7 is withdrawn;
FIG. 9 is a perspective view showing that a housing separates from the water supply device of FIG. 7;
FIG. 10 is an exploded perspective view showing that the water supply device of FIG. 7 is disassembled;
FIG. 11 is a plan view showing that a first housing is removed from the water supply device of FIG. 7;
FIG. 12 is a cross-sectional view along line "XII-XII" of FIG. 7;
FIG. 13 is a view showing that a slider is fixed in the water supply device of FIG. 11; and
FIG. 14 is a view showing that a slider separates from the water supply device of FIG. 13.

### DETAILED DESCRIPTION

The above-described aspects, features and advantages are specifically described hereafter with reference to accompanying drawings such that one having ordinary skill in the art to which the invention pertains can embody the invention easily. Detailed description of known technologies in relation to the subject matter of the invention is omitted if it is deemed to make the gist of the invention unnecessarily vague. Hereafter, preferred embodiments according to the invention are specifically described with reference to the accompanying drawings. In the drawings, identical reference numerals can denote identical or similar components.

The terms "first", "second" and the like are used herein only to distinguish one component from another component. Thus, the components are not to be limited by the terms. Certainly, a first component can be a second component, unless stated to the contrary.

The accompanying drawings are provided for a better understanding of the embodiments set forth herein and are not intended to limit the technical invention. It is to be understood that all the modifications or replacements within the technical scope of the invention are included in the scope of the invention. The sizes or thicknesses of the components in the drawings are exaggerated or reduced to ensure ease of understanding and the like. However, the protection scope of the subject matter of the invention is not to be interpreted in a limited way, because of the exaggerated or reduced thicknesses and sizes of the components.

The terms in the invention are used only to describe specific embodiments and not intended to limit the subject matter of the invention. In the invention, singular forms include plural forms as well, unless explicitly indicated otherwise. In the invention, the terms "comprise", "being comprised of" and the like specify the presence of stated features, integers, steps, operations, elements, components or combinations thereof but do not imply the exclusion of the presence or addition of one or more other features, integers, steps, operations, elements, components or combinations thereof.

The terms "first", "second" and the like are used herein only to distinguish one component from another component, and the components are not to be limited by the terms.

When any one component is described as being "connected" or "coupled" to another component, any one component can be directly connected or coupled to another component, but an additional component can be "interposed" between the two components. When any one component is described as "being directly connected" or "being directly coupled" to another component, an additional component cannot be "interposed" between the two components.

When any one component is described as being "on (or under)" another component, any one component can be directly on (or under) another component, and an additional component can be interposed between the two components.

Unless otherwise defined, all the terms including technical or scientific terms used herein have the same meaning as commonly understood by one having ordinary skill in the art. Additionally, terms such as those defined in commonly used dictionaries are to be interpreted as having a meaning that is consistent with their meaning in the context of the relevant art, and unless explicitly defined herein, are not to be interpreted in an ideal way or an overly formal way.

In the state where a cooking appliance stands on a floor, a direction in which a door is installed with respect to the center of the cooking appliance is defined as a forward direction. Accordingly, a direction toward the inside of the cooking appliance with the door open is defined as a rearward direction. For convenience, the forward direction and the rearward direction can be referred to as a first direction. Then the forward direction can be referred to as one direction of the first direction, and the rearward direction can be referred to as the other direction of the first direction.

Additionally, a gravitational direction can be defined as a downward direction, and a direction opposite to the gravitational direction can be defined as an upward direction.

Further, a horizontal direction across a front-rear direction of the cooking appliance, i.e., a widthwise direction of the cooking appliance that is seen in front of the door of the cooking appliance, can be referred to as a left-right direction. For convenience, the left-right direction can be referred to as a second direction. Then the right side can be referred to as one side of the second direction, and the left side can be referred to as the other side of the second direction.

Further, the widthwise direction of the cooking appliance can also be referred to as a lateral direction. Then the right side can also be referred to as one side of the lateral direction, and the left side can be referred to as the other side of the lateral direction.

Additionally, the up-down direction can be referred to as a third direction. Then an upward direction can be referred to as one direction of the third direction, and the downward direction can be referred to as the other direction of the third direction.

Furthermore, the up-down direction can be referred to as a vertical direction. Then the front-rear direction and the left-right direction, i.e., the first direction and the second direction, can be referred to as a horizontal direction.

Throughout the invention, the terms "A and/or B" as used herein can denote A, B or A and B, and the terms "C to D" can denote C or greater and D or less, unless stated to the contrary.

### [Entire structure of cooking appliance]

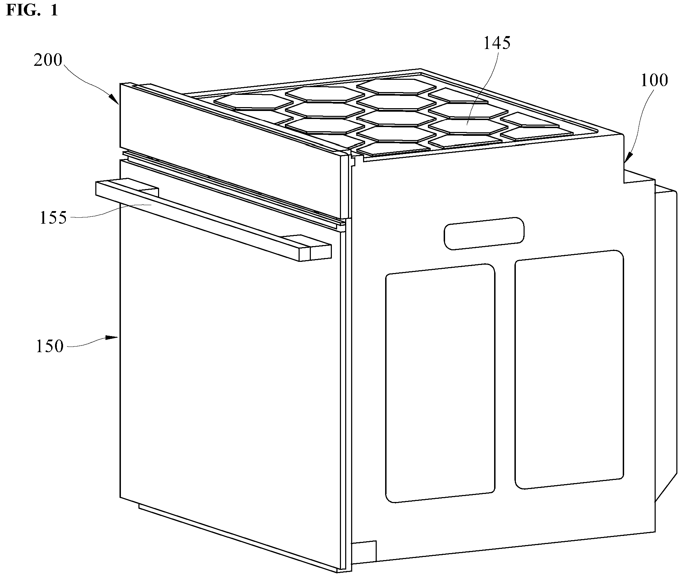

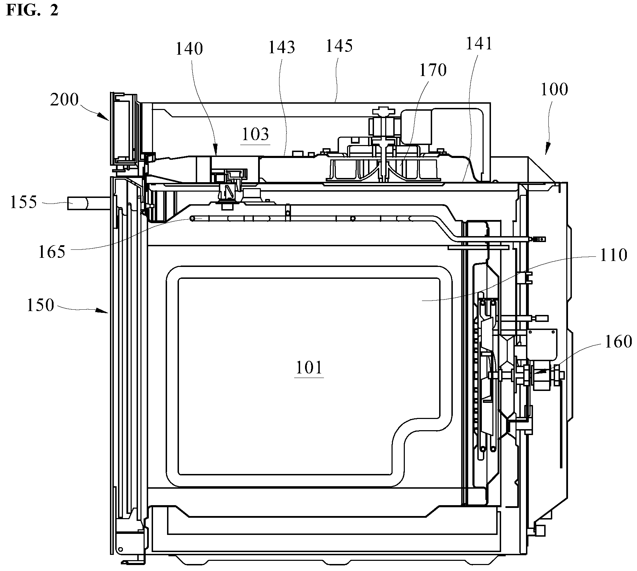

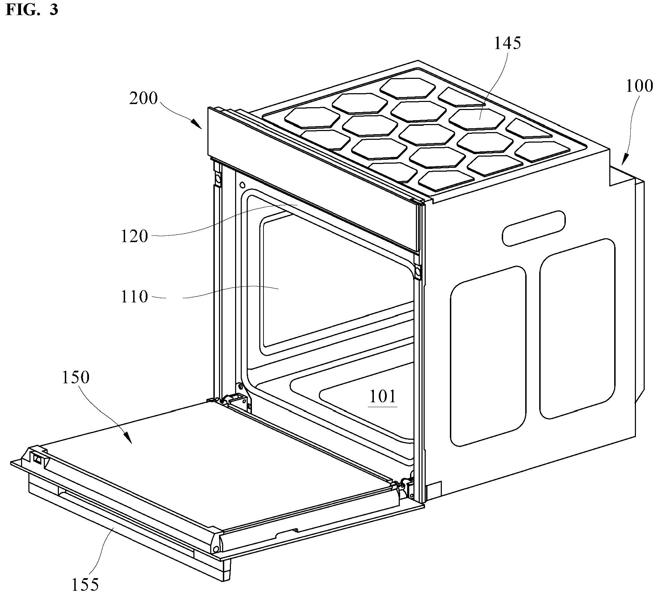

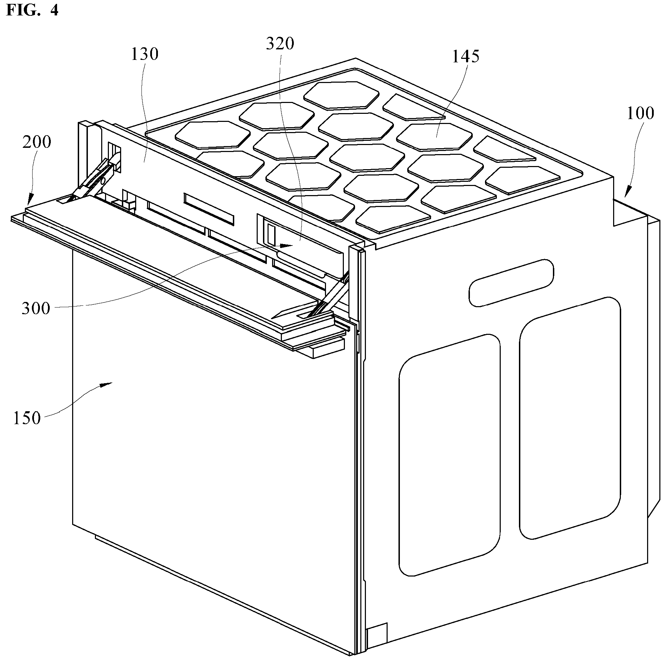

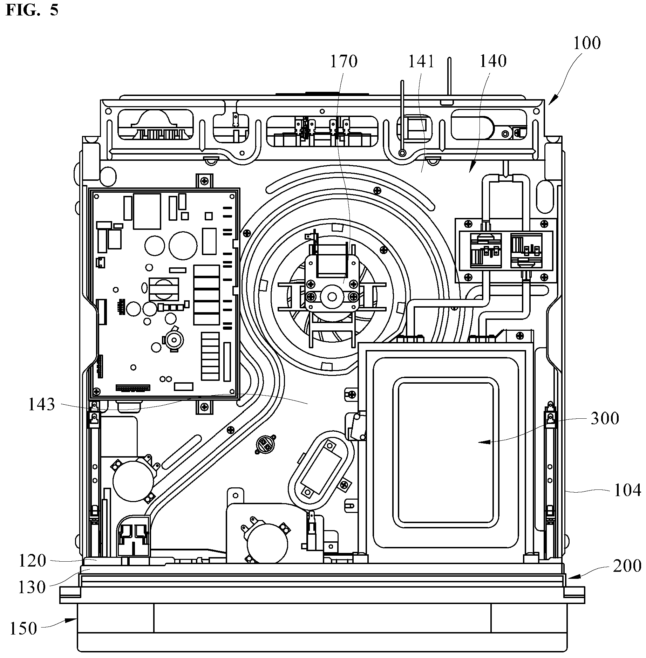

FIG. 1 is a perspective view showing a cooking appliance of one embodiment, FIG. 2 is a lateral cross-sectional view showing the inner structure of the cooking appliance of FIG. 1, and FIG. 3 is a perspective view showing the cooking appliance of FIG. 1 with a cooking compartment open. Additionally, FIG. 4 is a perspective view showing the cooking appliance of FIG. 1 with a control panel open, and FIG. 5 is a plan view showing the inner structure of an electronic component compartment of the cooking appliance of FIG. 1.

Referring to FIGS. 1 to 4, the exterior of the cooking appliance of one embodiment is formed by a main body 100. The main body 100 may have a shape comprising an approximate rectangular cuboid shape. The main body 100 may be made of a material having a predetermined strength, to protect a plurality of components installed in the inner space of the main body 100.

The main body 100 may comprise a cavity 110. The cavity 110 may form the skeleton of the main body 110.

Additionally, the main body 100 may further comprise front panels 120, 130. A first front panel 120 as one of the front panels 120, 130 may be provided.

The first front panel 120 may be disposed between the cavity 110 and a door 150. The first front panel 120 may be disposed at the front side of the cavity 110 and form the front surface of the main body 100.

In another example, the first front panel 120 is not formed apart from the cavity 110, and the front surface of the cavity 110 may form the front surface of the main body 100.

For example, the cavity 110 and the first front panel 120 may be provided at the main body 100 in a way that the cavity 110 and the first front panel 120 are integrally formed.

A cooking compartment 101 may be formed in the cavity 110. Additionally, an open part may be formed inside the first front panel 120 and open the cooking compartment forward.

The cooking compartment 101 may be shaped into a cuboid the front surface of which is open. With the cooking compartment 101 closed, the cooking appliance may heat the inner space of the cooking compartment 101 to cook a food item.

That is, the inner space of the cooking compartment 101 may be a space in which a food item is substantially cooked, in the cooking appliance. Hereafter, the cooking appliance of the present invention is described with reference to a cooking appliance as an example.

The cooking appliance may be provided with a heating part that heats the cooking compartment 101. As an example of the heating part, a convection part 160 may be provided at the rear side of the cooking compartment 101 and perform convection of hot air to heat the inner space of the cooking compartment 101.

Additionally, an upper heater or an upper burner may be provided as an upper heating part 165, at the upper side of the cooking compartment 101, and heat the inner space of the cooking compartment 101 from above. Further, a lower heater or a lower burner may be provided as a heating part, at the lower side of the cooking compartment 101, and heat the inner space of the cooking compartment 101 from below.

A door 150 may be swivably provided at the front side of the main body 100 and selectively open and close the cooking compartment 101. The door 150 may open and close the cooking compartment 101 in a pull-down manner where the upper end of the door 150 swivels around the lower end thereof in the up-down direction.

The door 150 may be shaped into a cuboid and have a predetermined thickness, as a whole. Additionally, a handle 155 may be provided on the front surface of the door 150, and gripped by the user when the user wants to swivel the door 150.

Further, the door 150 may be provided with a see-through window. The see-through window may be made of a transparent material, e.g., glass or colorless plastic and the like. Depending on a cooking appliance to which a see-through window is applied, a see-through window may need to withstand high temperature and high pressure and have water resistance, heat resistance and the like.

An electronic component compartment 103 may be provided outside the cavity 110, specifically, at the upper side of the cavity 110, as illustrated in FIGS. 2 and 5. The electronic component compartment 103 may be disposed at the upper side of the cavity 110 and at the upper side of the cooking compartment 101 formed inside the cavity 110.

A space for installing electronic components may be formed inside the electronic component compartment 103. That is, in the cooking appliance, the electronic component compartment 103 may be a space for installing electronic components.

As illustrated in FIGS. 3 to 5, the front surface of the electronic component compartment 103 may be shielded by the front panels 120, 130. A second front panel 130 as one of the front panels 120, 130 may be provided.

The second front panel 130 may be disposed between the electronic component compartment 103 and the control panel 200, while blocking the front side of the electronic component compartment 103.

In an example, the second front panel 130 may be disposed at the upper side of the first front panel 120, and coupled to the first front panel 120.

The second front panel 130 may protrude upward from the cavity 110 and define the front boundary surface of the electronic component compartment 103. Specifically, most of the front side of the electronic component compartment 103 is blocked by the second front panel 130. Additionally, a portion of the front side of the electronic component compartment 103, i.e., a portion of the lower side of the electronic component compartment 103, may be blocked by the first front panel 120.

Further, an exhaust opening may be provided on the front panels 120, 130. In the embodiment, the exhaust opening is provided on the first front panel 120, for example.

The exhaust opening may be formed in a way that penetrates the first front panel 120 in the front-rear direction. The exhaust opening may form a passage on the front panel 120, and allow air in the electronic component compartment 103 to pass through the first front panel 120 and to be discharged out of the electronic component compartment 103.

In another example, the front panel 120, 130 may not be provided apart from the cavity 110, and the front surface of the cavity 110 may form the front surface of the main body 100. At this time, the exhaust opening may be provided on the front surface of the cavity 110 having a space corresponding to the shape of the front panel 120, 130.

A control panel 200 may be provided in the upper portion of the front surface of the cooking appliance, i.e., on the front surface of the upper portion of the cavity 110. The control panel 200 may form a portion of the exterior of the front surface of the cooking appliance.

The control panel 200 may be disposed at the front of the electronic component compartment 103. Additionally, the control panel 200 may be disposed at the front side of the second front panel 130.

The control panel 200 may be provided to open and close the electronic component compartment 103 or the second front panel 130. The control panel 200 may be provided in a way that the control panel 200 swivels between a closing position where the control panel 200 blocks the electronic component compartment 103 or the second front panel 130, and an opening position where the control panel 200 opens the electronic component compartment 103 or the second front panel 130 forward.

A display may be provided on the control panel 200. The display may comprise an input part for adjusting an operation of the cooking appliance and a display displaying an operation state of the cooking appliance.

In an example, the input part and the display may be constituted by one panel. For example, the input part and the display may be formed into a touch panel to which a touch input of the user is supplied. The display may display a user interface (UI) or a graphic user interface (GUI) in relation to the driving of the cooking appliance.

A plurality of buttons may be displayed on the control panel 200 with the above display. For example, a knock-on button may be displayed on the control panel 200, and used to set a function that enables the on/off of a lamp 190 installed in the cooking compartment 130, based on a knock input of the user.

Additionally, a lamp button for setting a function of turning on/off a lamp manually, a button for setting an opening and closing operation of the control panel 200 and the like may be displayed on the control panel 200.

In the case where the cooking appliance is an oven, a button for setting an operation of the heating part, a self-cleaning button for setting a self-cleaning function of the cooking compartment 130, and the like may be displayed on the control panel 200.

### [Inner structure of electronic component compartment]

Referring to FIGS. 2 to 5, the lower boundary surface of the electronic component compartment 103 may be defined by an upper panel 140 disposed at the upper side of the cavity 110. Additionally, the upper boundary surface of the electronic component compartment 103 may be defined by an electronic component compartment cover 145 that covers the electronic component compartment 103 from above.

Further, the lateral boundary surfaces and the rear boundary surface of the electronic component compartment 103 may be defined by the electronic component compartment cover 145's both lateral surfaces and rear surface, or defined by both lateral surfaces of the cavity 110 protruding toward the upper side of the cooking compartment 101 and by the rear surface of the electronic component compartment cover 145.

A vent hole 104 may be formed on at least any one of both the lateral surfaces and the rear surface of the electronic component compartment cover 145, and both the lateral surfaces of the cavity 110. Through the vent hole 104, external air may flow into the electronic component compartment 103.

As described above, a variety of electronic components may be disposed in the electronic component compartment 103. In an example, a circuit board may be disposed in the electronic component compartment 103. Various types of elements, circuits and the like in relation to the receipt of a manipulation signal input through the control panel 200, the generation of a control signal for controlling an operation of the heating part, input through the control panel 200, and the like may be provided on the circuit board.

The upper panel 140 may comprise a blocking plate part 141 and a duct part 143.

The blocking plate part 141 may be disposed to block between the cavity 110 and the electronic component compartment 103. The blocking plate part 141 may be disposed at the upper side of the cavity 110 and define the lower boundary surface of the electronic component compartment 103.

The duct part 143 may protrude upward from the blocking plate part 141. The duct part 143 may form a passage that allows air in the electronic component compartment 103 to be discharged out of the electronic component compartment 103 through the duct part 143. That is, the duct part 143 may form a passage that allows air suctioned by a fan module 170 described hereafter to flow to the exhaust opening.

The fan module 170 may be disposed in the electronic component compartment 103. The fan module 170 may be disposed near the rear surface of the cavity 110, i.e., in a position eccentric to the rear side in the electronic component compartment 103.

The fan module 170 may comprise a turbo fan that is installed in the electronic component compartment 103. The fan module 170 may suction external air through the rear side of the electronic component compartment 103, and discharge the external air to the front side of the electronic component compartment 103.

Based on an operation of the fan module 170, external air may flow into the electronic component compartment 103 from the rear side and lateral sides of the cooking appliance.

For example, external air drawn through the lower portion of the main body 100 may pass through a space at the rear side of the cooking appliance, and then flow into the electronic component compartment 103 through the vent hole 104 formed at the rear side of the electronic component compartment 103. Also, external air may flow into the electronic component compartment 103, through the vent hole 104 formed at a lateral side of the electronic component compartment 103.

Air drawn into the electronic component compartment 103 may cool electronic comp onents in the electronic component compartment 103, while moving forward in the electr onic component compartment 103.

Air drawn into the electronic component compartment 103 as described above may be suctioned into the duct part 143 by the fan module 170. The air drawn into the duct part 143 may move forward in the duct part 143 and then be discharged to the front of the electronic component compartment 103 through the exhaust opening.

A water supply device 300 may be disposed in the electronic component compartment 103. The water supply device 300 may supply water, needed to generate steam in a steam supply device (not illustrated), to the steam supply device.

### [Structure of steam supply device]

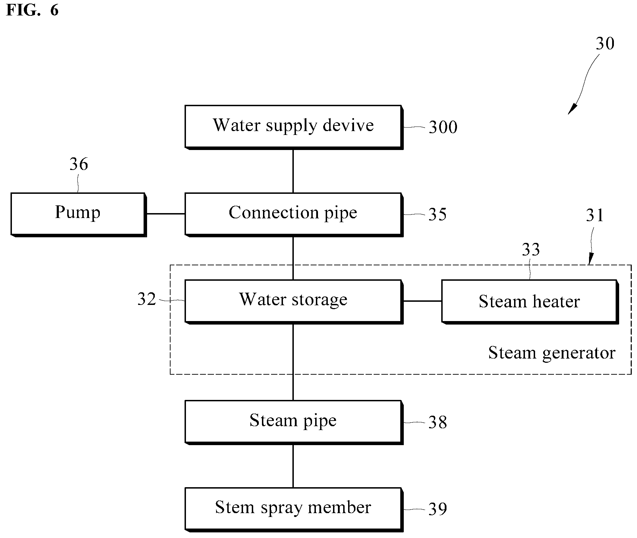

FIG. 6 is a block diagram showing the configuration of a steam supply device of one embodiment.

The cooking appliance of the embodiment, as illustrated in FIGS. 5 and 6, may further comprise a steam supply device 30.

The steam supply device 30 is installed in the main body 100 and provided to supply steam into the cooking compartment 101. The steam supply device 30 may comprise a steam generator 31, a water supply device 300 and a connection pipe 35.

The steam generator 31 is provided to heat water and generate steam. In an example, the steam generator 31 may be disposed at the lower side of the main body 100, and disposed at the lower side of the cooking compartment 101.

However, the steam generator of the present invention is not limited. The steam generator 31 may be disposed in any optimal position considering a detailed configuration of the steam generator 31, the structure of the cooking compartment 101 and steam supply efficiency based on the configuration and the structure.

The steam generator 31 may comprise a water storage 32 and a steam heater 33. Water that is supplied from the water supply device 300 through the connection pipe 35 may be stored in the water storage 32. The steam heater 33 may generate steam by heating the water stored in the water storage 32.

The water supply device 300 is provided to store and supply water that is supplied to the steam generator 31. In the embodiment, the water supply device 300 is disposed at the upper side of the main body 100 and disposed at the upper side of the cooking compartment 101, for example.

However, the water supply device of the present invention is not limited. The water supply device 300 may be disposed in any position where the water supply device 300 is not greatly affected by heat in a high-temperature cooking compartment 101, a water tank 320 is readily withdrawn, and water is supplied to the steam generator 31 smoothly.

The connection pipe 35 may connect the water supply device 300 and the steam generator 31. The connection pipe 35 may form a passage that is needed to allow water supplied from the water supply device 300 to move to the steam generator 31.

In an example, the connection pipe 35 may be formed as a flexible tube. In another example, the connection pipe 35 may be formed as a pipe made of a metallic material.

Additionally, the connection pipe 35 may connect to the steam generator 31 by bypassing the cooking compartment 101 from the water supply device 300. In an example, the connection pipe 35 may connect to the steam generator 31 through a path in which the connection pipe 35 bypasses the rear side of the cooking compartment 101. In another example, the connection pipe 35 may connect to the steam generator 31 through a path in which the connection pipe 35 bypasses a lateral side of the cooking compartment 101.

At this time, water may be supplied from the water supply device 300, based on force caused by a difference between the height or pressure of the water supply device 300 and the height or pressure of the water storage 32, or power of a pump 36 disposed at the water storage 32 side or the connection pipe 35 side.

Further, the steam supply device 30 may further comprise a steam spray member 39. The steam spray member 39 is provided to spray steam generated by the steam supplier 31 into the cooking compartment 15.

The steam spray member 39 may be provided on the upper surface of the cavity 110, and connect to the water storage 32 of the steam supplier 31 through a steam pipe 38. The steam spray member 39 may form a passage that allows steam generated by the steam supplier 31 to spray downward from the upper portion of the cooking compartment 15 to the inside of the cooking compartment 15.

In the cooking appliance of the present invention, water supplied from the water supply device 300 may flow into the water storage 32 through the connection pipe 35, and the water having flown into the water storage 32 may be heated by the steam heater 33 to generate steam.

The generated steam may flow into the cooking compartment 101 through the steam spray member 39 and circulate in the cooking compartment 101. The steam circulating in the cooking compartment 101 may be used to perform cooking in the cooking appliance.

### [Entire structure of water supply device]

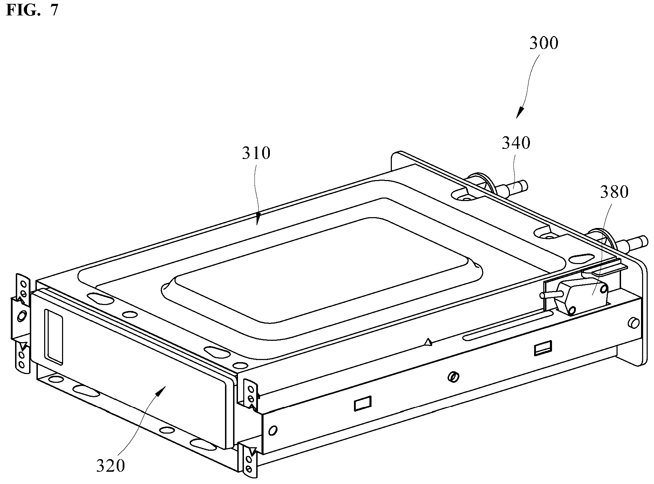

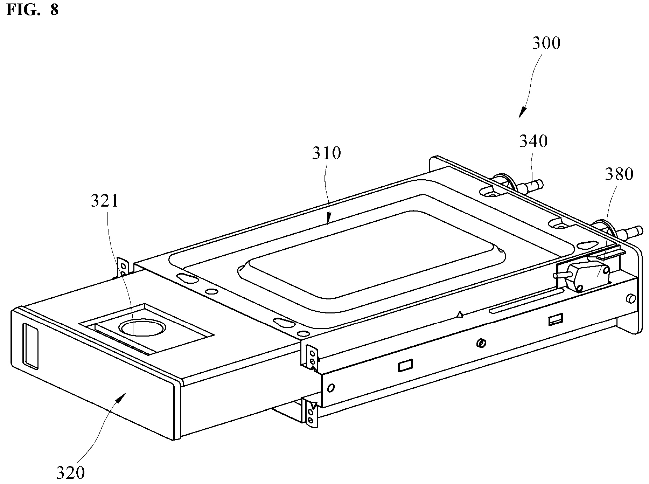

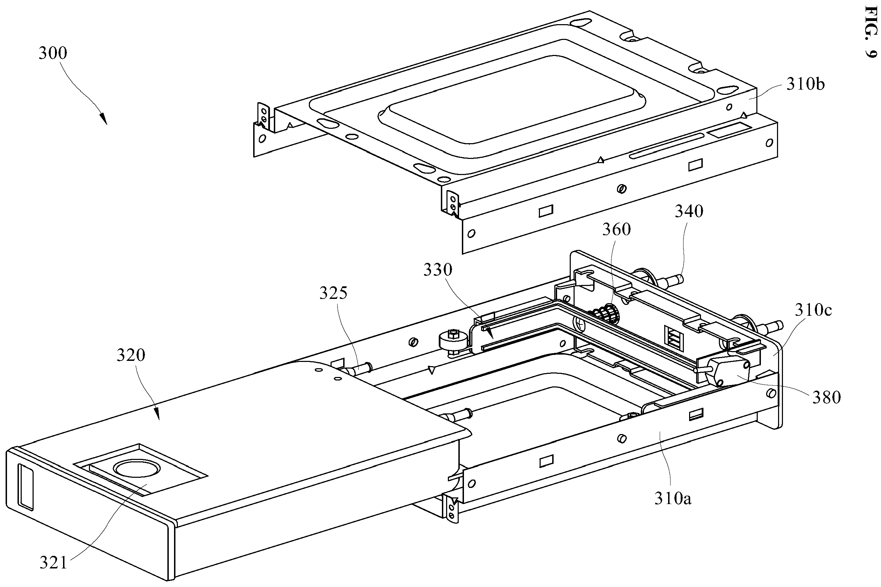

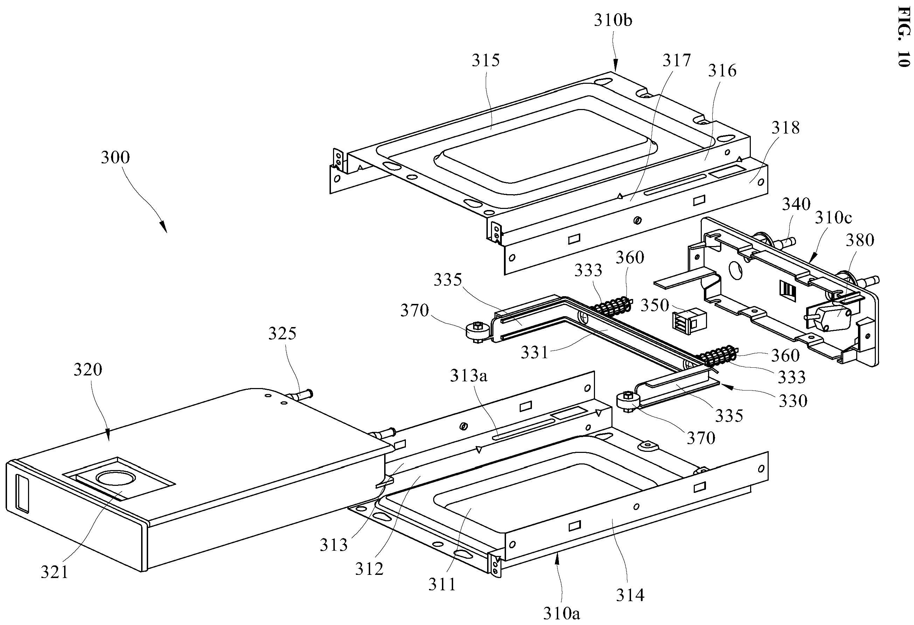

FIG. 7 is a perspective view showing a water supply device of one embodiment, and FIG. 8 is a perspective view showing that a water tank of the water supply device of FIG. 7 is withdrawn. FIG. 9 is a perspective view showing that a housing separates from the water supply device of FIG. 7, and FIG. 10 is an exploded perspective view showing that the water supply device of FIG. 7 is disassembled.

Referring to FIGS. 5 to 8, the water supply device 300 comprises a housing 310 and a water tank 320.

The housing 310 may be disposed in the electronic component compartment 103. The housing 103 may be coupled to the upper panel 140 and fixed to the inside of the electronic component compartment 103.

The housing 310 may be shaped into a box having an accommodation space therein. The housing 310 may form a skeleton needed to accommodate and install a variety of components constituting the water supply device 300. Additionally, the housing 310 may serve as a coupling medium for coupling the water supply device 300 to the main body 100.

In the embodiment, the housing 310 may be shaped into a cuboid box having an accommodation space therein, for example. The front surface of the housing 310 may be open forward. The accommodation space formed in the housing 310 may be open forward through the front surface of the housing 310.

A water tank 320 and a slider 330 described hereafter are accommodated in the accommodation space of the housing 310. The open front surface of the housing 310 is a passage that allows the water tank 320 installed in the housing 310 to be drawn out of the housing 310 and the main body 100.

The water tank 320 is provided to store water. A storage space for storing water may be formed in the water tank 320. Water stored in the water tank 320 may be supplied to the steam generator 31 through the connection pipe 35.

The water tank 320 is installed in the housing 310 in a way that the water tank 320 can come into and out of the housing 310 in the front-rear direction. The water tank 310 may move forward and protrude to the front of the housing 310, or move rearward and come into the housing 310 completely.

The water supply device 300 further comprises a slider 330. The slider 330 may be disposed in the accommodation space of the housing 310. The slider 330 is accommodated in the housing 310 in a way that the slider 330 can move in the front-rear direction.

The slider 330 connects to the water tank 320 in the housing 310 and moves together with the water tank 320. For example, the water tank 320 connects to the slider 330 such that the water tank 320 may move forward together with the slider 330. Additionally, the slider 330 may connect to the water tank 320 such that the slider 330 may move rearward together with the water tank 320.

In an example, the water tank 320 may be moved forward by the slider 330 that moves forward, and the slider 330 may move rearward by the water tank 320 that moves rearward.

A detailed structure and a detailed operation of the slider 330 are described hereafter.

### [Structure of housing]

Referring to FIGS. 8 to 10, the housing 310 may comprise a first housing 310a and a second housing 310b.

The first housing 310a may form a lower half of the housing 310. The first housing 310a may comprise a bottom surface part 311 and a pair of first lateral surface parts 312.

The bottom surface part 311 may form the bottom surface of the housing 310, and be disposed at the lower side of the water tank 320. The bottom surface part 311 may be disposed to face the bottom surface of the housing 310.

At least a portion of the bottom surface part 311 may form a horizontal planar surface parallel with the bottom surface of the water tank 320. The bottom surface part 311 may support the water tank 320 at the lower side of the water tank 320 in a way that the water tank 320 can move in the front-rear direction.

In an example, a first sliding projection 323 may be provided in the lower portion of the water tank 320. The first sliding projection 323 may be formed in a way that the first sliding projection 323 protrudes downward from the bottom surface of the water tank 320.

A pair of first sliding projections 323 may be disposed at the water tank 320 and spaced a predetermined distance apart from each other in the lateral direction. The lateral length of each of the first sliding projections 323 may be much less than a lateral length of the bottom surface 311 of the housing 310. That is, the first sliding projection 323 may be shaped into a long thin rod.

In the embodiment, the entire bottom surface of the water tank 320 may contact the bottom surface part 311 through the first sliding projection 323, without contacting the bottom surface part 311. That is, an area where the bottom surface of the water tank 320 contacts the housing 310 may be limited to an area where the first sliding projection 323 contacts the bottom surface part 311.

The first sliding projection 323 formed as describe above may help to reduce an area of contact between the housing 310 and the water tank 320, to reduce a frictional force that is generated at a time when the water tank 320 moves.

Additionally, the first lateral surface parts 312 may form a portion of the lateral surfaces of the housing 312 and connect to the bottom surface part 311. The pair of first lateral surface parts 312 may extend upward from the end portions of both sides of the bottom surface part 311, and each of the first lateral surface parts 312 may be disposed in the lateral portions of the water tank 320.

The first housing 310a may further a first guide surface part 313. The first guide surface part 313 may extend in a direction far from the bottom surface part 311, while extending from the first lateral surface part 312 in the lateral direction.

The first guide surface part 313 may be formed in a way that the first guide surface part 313 extends from the upper end of the first lateral surface part 312 in the lateral direction. The first guide surface part 313 may be spaced from the bottom surface part 311 by the up-down length of the first lateral surface part 312, while being disposed at the upper side of the bottom surface part 311.

In an example, at least a portion of the bottom surface part 311 may form a horizontal planar surface parallel with the bottom surface of the water tank 320. Further, the first guide surface part 313 may form a planar surface parallel with a horizontal planar surface formed at the bottom surface part 311.

In the embodiment, the bottom surface part 311 may support the water tank 320 at the lower side of the water tank 320 in a way that the water tank 320 can move in the front-rear direction. Additionally, the first guide surface part 313 disposed at the upper side of the bottom surface part 311 may support the slider 330 at the lower side of the slider 330 described hereafter, in a way that the slider 330 can move in the front-rear direction.

The second housing 310b may form an upper half of the housing 310. The first housing 310a and the second housing 310b may be formed separately, and may be coupled to each other in the up-down direction to form the housing 310.

In an example, the second housing 310a may have a shape that is almost similar to a shape in which the first housing 310a is reversed in the up-down direction. The second housing 310b may comprise an upper surface part 315 and a pair of second lateral surface parts 316.

The upper surface part 315 may from the upper surface of the housing 310, and be disposed at the upper side of the water tank 320. The second lateral surface parts 316 may form a portion of the lateral surfaces of the housing 310, and connect to the upper surface part 315. The pair of second lateral surface parts 316 may extend downward from the end portions of both sides of the upper surface part 315, and each of the second lateral surface parts 316 may be disposed in the lateral portion of the water tank 316.

Further, the second housing 310b may further comprise a second guide surface part 317. The second guide surface part 317 may extend in a direction far from the upper surface part 315, while extending from the second lateral surface part 316 in the lateral direction.

The second guide surface part 317 may be formed in a way that the second guide surface part 317 extends from the lower end of the second lateral surface part 316 in the lateral direction. The second guide surface part 317 may be spaced from the upper surface part 315 by the up-down length of the second lateral surface part 316, while being disposed at the lower side of the upper surface part 315.

Further, the first housing 310a may comprise a first coupling surface part 314, and the second housing 310b may comprise a second coupling surface part 318. The first coupling surface part 314 may be disposed respectively in both lateral portions of the first housing 310a, and the second coupling surface part 318 may be respectively disposed in both lateral portions of the second housing 310b.

The first coupling surface part 314 may be formed to extend upward from the end portion of the first guide surface part 313 in the lateral direction thereof. Further, the second coupling surface part 318 may be formed to extend downward from the end portion of the second guide surface part 317 in the lateral direction thereof.

The first coupling surface part 314 and the second coupling surface part 318 may be disposed to touch each other in the lateral direction. In the state where the first coupling surface part 314 and the second coupling surface part 318 are touched in the lateral direction as described above, the first coupling surface part 314 and the second coupling surface part 318 may be coupled.

The first coupling surface part 314 and the second coupling surface part 318 may be coupled in both lateral portions of the housing 310, and based on a coupling between first coupling surface part 314 and the second coupling surface part 318, the first housing 310a and the second housing 310b maybe coupled.

In the state where the first housing 310a and the second housing 310b are coupled, the bottom surface part 311 and the upper surface part 315 may be spaced from each other by an approximate up-down length of the water tank 320, and the first guide surface part 313 and the second guide surface part 317 may be spaced from each other by an approximate up-down length of the slider 330.

That is, the water tank 320 may be accommodated in a space formed between the bottom surface part 311 and the upper surface part 315, and the slider 330 may be accommodated in a space formed between the first guide surface part 313 and the second guide surface part 317.

In the space formed between the bottom surface part 311 and the upper surface part 315, the bottom surface part 311 may support the water tank 320 in a way that the water tank 320 can move in the front-rear direction. In the space formed between the first guide surface part 313 and the second guide surface part 317, the first guide surface part 313 may support the slider 330 in a way that the slider 330 can move in the front-rear direction.

The housing 310 may further comprise a rear surface cover 310c. The rear surface cover 310c may be disposed at the rear sides of the first housing 310a and the second housing 310b.

In a coupled body of the first housing 310a and the second housing 310b, the front surface and the rear surface of the coupled body are open. The rear surface cover 310c may cover the open rear surface of the coupled body of the first housing 310a and the second housing 310b, and form the rear surface of the housing 310. The rear surface cover 310c may be disposed at the rear side of the slider 330 accommodated in the housing 310.

Preferably, at least a portion of the housing 310 may made of a metallic material. In the embodiment, the first housing 310a and the second housing 310b may be made of a metallic material, and the rear surface cover 310b comprising a structure of a complex shape may be made of a plastic material, for example.

The first housing 310a and the second housing 310b made of a metallic material may be highly resistance against heat that is delivered through the cavity 110. Further, the first housing 310a and the second housing 310b may be made of a metallic material having enough stiffness to protect the water tank 320 and the slider 330 from an external impact.

### [Structure of water tank]

In an example, the water tank 320 may be shaped into a cuboid box. For example, the water tank 320 may be shaped into a cuboid box corresponding to the shape of the accommodation space in the housing 310.

The water tank 320 may be installed in a way that the water tank 320 is movable in the front-rear direction, while being installed in the housing 310. The water tank 320 may be installed in the housing 310, such that the entire area of the water tank 320 may be disposed in the accommodation space of the housing 310, and may be withdrawn out of the housing 310 and the main body 100 through the open front surface of the housing 310.

In the embodiment, the water tank 320 may be installed in the housing 310 in a way that the position of the water tank 320 is changeable to an insertion position and a withdrawal position.

In the embodiment, the insertion position is defined as a position of the water tank 320, at a time when the entire area of the water tank 320 is inserted into the accommodation space of the housing 310. In the case where the water tank 320 is in the insertion position, an input hole and a lid 321 that are disposed near the front surface of the water tank 320 may be disposed in the accommodation space of the housing 310.

Additionally, in the embodiment, the withdrawal position is defined as a position of the water tank 320, at a time when at least a partial area of the water tank 320 protrudes to the front sides of the accommodation space and the main body 100. In the case where the water tank 320 is in the withdrawal position, at least a portion of the input hole and the lid 321 of the water tank 320 may be exposed out of the accommodation space and the main body 100.

In the insertion position, the water tank 320 may be disposed in the electronic component compartment 103 and the housing 310. The water tank 320 may move to the withdrawal position while passing through the front panel 120, 130. Specifically, the water tank 320 may be withdrawn forward from the cooking appliance while passing through the second front panel 130.

Further, the input hole may be formed in the upper portion of the water tank 320. The input hole may form a passage for inputting water to a storage space from the outside of the water tank 320, at the water tank 320, and may be disposed in a way that the input hole is eccentric to the front side of the water tank 320.

The lid 321 may be disposed at the upper side of the input hole. The lid 321 may be provided to open and close the input hole at the upper side of the input hole.

A water tank nozzle 325 may be provided at the water tank 320. The water tank nozzle 325 may form a passage for allowing water stored in the storage space of the water tank 320 to move out of the water tank 320. At least a portion of the water tank nozzle 325 may protrude from the rear of the water tank 320.

The portion of the water tank nozzle 325, which is exposed to the outside, is formed to protrude from the rear side of the water tank 320 to face the rear surface of the housing 310. Further, a tube supporter 340 may be provided on the rear surface of the housing 310.

The tube supporter 340 may be disposed at the rear surface cover 310c. The tube supporter 340 may be provided in a way that the tube supporter 340 is detachably coupled to the water tank nozzle 325.

In an example, the tube supporter 340 may be disposed in a way that the tube supporter 304 penetrates the rear surface cover 310c in the front-rear direction, while being disposed at the rear surface cover 310c. The anterior portion of the tube supporter 340 may be exposed to the water tank 320 side, and coupled detachably to the water tank nozzle 325. The posterior portion of the tube supporter 340 may connect to the connection pipe 35. That is, the water tank nozzle 325 and the connection pipe 35 may connect to each other based on their connection with the tube supporter 340.

The tube supporter 340 may further comprise a gasket. The gasket may seal between the water tank nozzle 325 and the tube supporter 340 to prevent the leakage of water from between the water tank nozzle 325 and the tube supporter 340.

The water tank nozzle 325 may be coupled to the tube supporter 340 at a time when the water tank 320 is in the insertion position. At a time when the water tank nozzle 325 is coupled with the tube supporter 340, the water tank nozzle 325 and the connection pipe 35 may connect to each other, making it possible to supply water to the steam generator 31.

In the case where the water tank 320 moves to the withdrawal position, the water tank nozzle 325 may be decoupled from the tuber supporter 340. As the water tank nozzle 325 is decoupled from the tube supporter 340, the water tank nozzle 325 and the connection pipe 35 are disconnected from each other, and the supply of water to the steam generator 31 may be cut off.

### [Structure of slider]

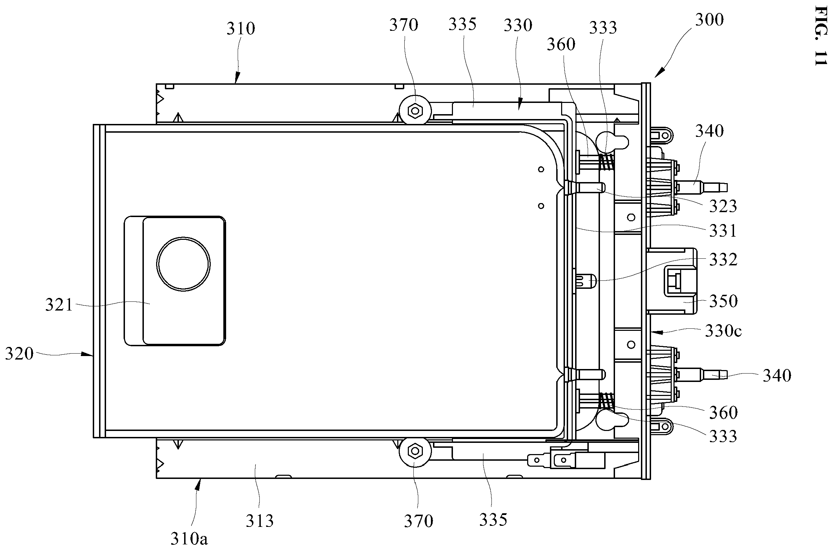

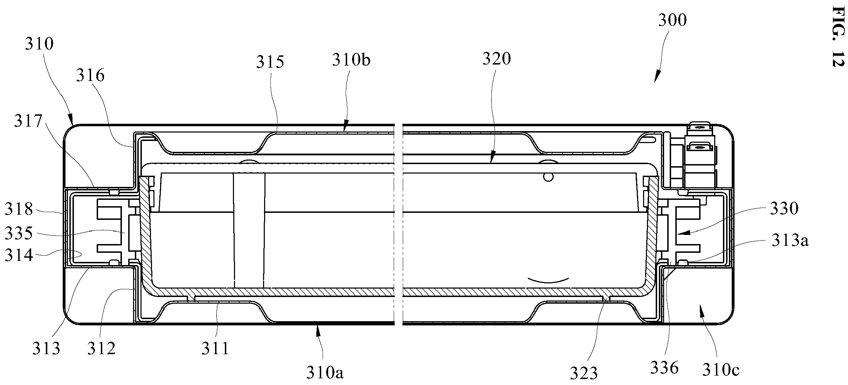

FIG. 11 is a plan view showing that a first housing is removed from the water supply device of FIG. 7, and FIG. 12 is a cross-sectional view along line "XII-XII" of FIG. 7.

Referring to FIGS. 9 to 12, the water supply device 300 of the embodiment may further comprise a slider 330. The slider 330 may be accommodated in the housing 310 in a way that the slider 330 can move in the front-rear direction, and comprise a rear surface frame 331.

The rear surface frame 331 may be disposed at the rear side of the water tank 320. The rear surface frame 331 may be shaped into a horizontal bar that extends in the lateral direction, and disposed to touch the rear surface of the water tank 320.

The slider 330 may further comprise a pair of lateral surface frames 335. Each of the lateral surface frames 335 may extend forward from the rear surface frame 331 and be disposed to face the lateral surface of the water tank 320. The pair of lateral surface frames 335 formed as described above may be spaced from each other in the lateral direction, with the water tank 320 therebetween.

In an example, the slider 330 may be formed in a way that the rear surface frame 331 and the pair of lateral surface frames 335 connect in a " 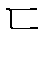 " shape. As the water tank 320 and the slider 330 connect, at least a portion of the water tank 320 may be inserted into a space that is surrounded by the rear surface frame 331 and the pair of lateral surface frames 335.

As the water tank 320 and the slider 330 connect as described above, the rear surface frame 331 may contact the rear surface of the water tank 320 closely, and each of the lateral surface frames 335 may contact each of the lateral surfaces of the water tank 320 closely.

Additionally, as the water tank 320 and the slider 330 connect as described above, the water tank 320 is not fixed to the slider 330 or the slider 330 is not fixed to the water tank 320. **In** the embodiment, the water tank 320 and the slider 330 may keep connecting to each other, only in the state where a portion of the water tank 320 is inserted into the space surrounded by the rear surface frame 331 and the pair of lateral surface frames 335.

The water tank 320 and the slider 330 connected as described above may move together, when necessary, while separating from each other readily. **In** an example, the water tank 320 may keep connecting to the slider 330, such that the water tank 320 moves together with the slider 330 or the slider 330 moves together with the water tank 320.

For example, in the case where the slider 330 moves forward at a time when the water tank 320 is in the insertion position, the water tank 320 may move together with the slider 330. At this time, the rear surface frame 331 disposed at a rear side of the water tank 320 may push and move the water tank 320 forward, and the water tank 320 may move forward toward the insertion position.

Additionally, in the case where the water tank 320 moves rearward when the water tank 320 is in the insertion position, the slider 330 may move together with the water tank 320. At this time, the water tank 320 may push and move the rear surface frame 331 rearward, and the slider 330 may move rearward together with the water tank 320 that moves toward the insertion position.

A portion of the slider 330, specifically, the pair of lateral surface frames 335, may be accommodated in the space formed between the first guide surface part 313 and the second guide surface part 317. That is, each of the lateral surface frames 335 may be accommodated in the space that is surrounded by the first guide surface part 313, the coupling surface part 314, 318 and the second guide surface part 317.

Each of the lateral surface frames 335 accommodated in the space may be supported by the first guide surface part 313 in a way that the lateral surface frame 335 is movable in the front-rear direction.

In an example, a second sliding projection 336 may be provided in the lower portion of the lateral surface frame 335. The second sliding projection 336 may be formed in a way that protrudes downward from the bottom surface of the lateral surface frame 335.

The lateral length of each of the second sliding projections 336 may be much less than the lateral length of the bottom surface 311 of the housing 310 or the lateral length of the bottom surface of the lateral surface frame 335. That is, the second sliding projection 336 may be shaped into a long thin rod.

The entire bottom surface of the lateral surface frame 335 may contact the first guide surface part 313 through the second sliding projection 336, without contacting the first guide surface part 313. That is, an area where the lateral surface frame 335 and the first guide surface part 313 contact each other may be limited to an area where the second sliding projection 336 and the first guide surface part 313 contact each other.

The second sliding projection 336 formed as described above may help to reduce a contact area between the housing 310 and the slider 330, thereby reducing a frictional force that is generated as the slider 330 moves.

Further, a rail projection 313a may be provided in the housing 310. The rail projection 313a may be respectively formed on the first guide surface part 313. That is, in the housing 310, a pair of rail projections 313a may be spaced a predetermined distance apart from each other in the lateral direction. Each of the rail projections 313a may protrude upward from the first guide surface 313, and extend in the front-rear direction.

An up-down length of the rail projection 313a may be less than an up-down length of the second sliding projection 336. That is, the second sliding projection 336 may contact the first guide surface part 313, while the rail projection 313a does not contact the bottom surface of the lateral surface frame 335.

A lateral gap between the pair of rail projections 313a may be greater than a lateral gap between the pair of second sliding projections 336. Further, the pair of second sliding projections 336 provided at the slider 330 may be disposed between the pair of rail projections 313a.

The second sliding projection 336 disposed between the pair of rail projections 313a as described above may move in the front-rear direction within an area limited between the pair of rail projections 313a. That is, the rail projection 313a may regulate the area where the rail projection 313a moves, and suppress a shake of the rail projection 313a while the rail projection 313a moves in the front-rear direction.

The slider 330 comprising the pair of lateral surface frames 335 that sit in the first guide surface part 313 in a slidable manner may be installed in the housing 310 in a way that the slider 330 is movable in the front-rear direction.

Each of the lateral surface frames 335 may be disposed between the first guide surface part 313 and the second guide surface part 317, and the first guide surface part 313 and the second guide surface part 317 may regulate an up-down position of each lateral surface frame 335.

For example, an up-down gap between the first guide surface part 313 and the second guide surface part 317 may be set to a length corresponding to an up-down length of the lateral surface frame 335. The first guide surface part 313 and the second guide surface part 318 disposed as described above may help to suppress the generation of an up-down flow of the slider 330, and guide a front-rear movement of the slider 330 smoothly.

### [Structures of fixation part and pop-up member]

The water supply device 300 of the embodiment further comprises a fixation part 350.
The fixation part 350 may be disposed on the rear surface of the housing 310. In an example, the fixation part 350 may be disposed at the rear surface cover 310c.

The fixation part 350 may be provided to fix the slider 330. The slider 330 may be accommodated in the housing 310 in a way that the slider 330 is movable in the front-rear direction. The fixation part 350 fixes the slider 330 to prevent the slider 330 from moving forward.

As the water tank 320 moves to the insertion position, the slider 330 may be fixed by the fixation part 350. Additionally, as the slider 330 is fixed by the fixation part 350, the water tank 320 may remain in the insertion position.

A fixation projection 332 may be provided at the slider 330. The fixation projection 332 may be provided at the rear surface frame 331 and protrude to the rear of the slider 330. In the embodiment, the fixation projection 332 is shaped into a hook that protrudes rearward from the rear surface frame 331, for example.

As the water tank 320 moves to the insertion position, the slider 330 connecting to the water tank 320 may move rearward together with the water tank 320. At this time, the rear surface frame 331 and the fixation projection 332 may move to be near the fixation part 350, and the fixation part 350 may be coupled to the fixation projection 332 and fix the slider 330.

The fixation part 350 may be detachably coupled to the hook-shaped fixation projection 332, to selectively fix the positions of the slider 330 and the water tank 320 coupled to the slider 330.

In an example, the fixation part 350 may comprise a locking tool that enables the fixation part 350 to be fixed to and released from the fixation projection 332, based on a press manipulation. In the case of a fixation part 350, a press on the front surface of the water tank 320 connecting to the fixation projection 332 through the slider 330 is repeated, such that the fixation projection 332 and the locking tool are coupled or decoupled consecutively.

For example, in the case where the user presses the front surface of the water tank 320 to insert the fixation projection 332 into the fixation part 350, the fixation part 350 may be coupled to the fixation projection 332 to fix the slider 330. In this state, in the case where the user presses the front surface of the water tank 320 again, the fixation part 350 and the fixation projection 332 may be decoupled, and the slider 330 may be released.

The water supply device 300 of the embodiment may further comprise a pop-up member 360. The pop-up member 360 may provide power of moving the slider 330 separated from the fixation part 350 forward. To put it another way, the pop-up member 360 may provide power of moving the water tank 320 to the withdrawal position.

The pop-up member 360 may be disposed between the slider 330 and the rear surface cover 310c. The pop-up member 360 may elastically support the slider 330 at the rear side of the slider 330.

In an example, the pop-up member 360 may comprise a coil spring disposed between the rear surface frame 331 and the rear surface cover 310c. The coil spring provided as a pop-up member 360, may be deformed elastically in the front-rear direction. The end portion of the rear side of the coil spring may be supported by the rear surface cover 310c, and the end portion of the front side of the coil spring may support the rear surface frame 331 from rearward.

A guide projection 333 may be provided at the slider 330. The fixation projection 332 may be provided at the rear surface frame 331 and protrude toward the rear of the slider 330. In the embodiment, the fixation projection 332 is shaped into a rod protruding rearward from the rear surface frame 331, for example.

A plurality of guide projections 333 may be disposed at the slider 330 and spaced a predetermined distance apart from each other in the lateral direction. In the embodiment, a pair of guide projections 333 may be provided at the slider 330, for example.

In an example, the fixation projection 332 and the pair of guide projections 333 may be arranged at the rear surface frame 331 in the lateral direction, and the pair of guide projections 333 may be spaced from each other in the lateral direction, with the fixation projection 332 therebetween.

Preferably, the fixation projection 332 may be disposed at the center of the rear surface frame 331 in the lateral direction, and the pair of fixation projections 332 may be disposed in a way that the fixation projections are symmetrical to each other in the left-right direction, with respect to the fixation projection 332.

Further, a plurality of pop-up members 360 may be disposed between the rear surface frame 331 and the rear surface cover 310c. In the embodiment, a pair of pop-up members 360 is provided at the water supply device 300, for example.

In an example, the pair of pop-up members 360 may be disposed between the rear surface frame 331 and the rear surface cover 310c, and each of the pop-up members 360 may be coupled respectively to the guide projection 333.

Additionally, each guide projection 333 may be fitted and coupled to the pop-up member 360. Accordingly, each guide projection 333 may be fitted into the coil spring while passing through the coil spring in the front-rear direction.

The guide projection 333 fitted and coupled to the pop-up member 360 may support the pop-up member 360, such that the pop-up member 360 may be prevented from escaping and being deformed in the lateral direction.

In the embodiment, the fixation projection 332 may be disposed at the center of the rear surface frame 331 in the lateral direction, the pair of fixation projections 332 may be disposed in a way that the fixation projections 332 are symmetrical to each other in the left-right direction, with respect to the fixation projection 332, while the pair of pop-up members 360 may also be disposed in a way that the pop-up members 360 are symmetrical to each other in the left-right direction, with respect to the fixation projection 332.

Accordingly, an elastic force provided by the pop-up member 360 is applied to the slider 330 in a way that the elastic force is not biased toward to any one of the left side and the right side. For example, a uniform power may be applied to the lateral surface frame 335 on the left side of the slider 330, and the lateral surface frame 335 on the right of the slider 330.

Further, power provided by the pop-up member 360 may be supplied to the water tank 320 connecting to the slider 330, in a way that the power is not biased toward any one of the left side and the right side of the water tank 320.

Thus, the slider 330 may smoothly move forward without biasing left or right. The water tank 320 being moved forward by the slider 330 may be drawn smoothly to the front of the cooking appliance in the state where the water tank 320 remains aligned in the left-right direction.

Further, the guide projection 333 may be coupled to the housing 310 in a way that the guide projection 333 is movable in the front-rear direction.

In an example, the guide projection 333 may be coupled to the rear surface cover 310c while passing through the rear surface cover 310c in the front-rear direction. The guide projection 333 may be coupled to the rear surface cover 310c in a way that the guide projection 333 is movable in the front-rear direction.

The guide projection 333, coupled to the rear surface cover 310c in a way that the guide projection 333 is movable in the front-rear direction as described above, may couple the slider 330 to the housing 310 in a way that the slider 330 is movable in the front-rear direction. The guide projection 333 may support the slider 330 to prevent the slider 330 from escaping from the housing 310 and to allow the slider 330 to move reliably in the front-rear direction.

The guide projection 333 may be detachably fitted and coupled to the rear surface cover 310c. A plurality of hook members may be disposed in the end portion of the rear side of the guide projection 333. Each of the plurality of hook members may be provided in a way that the plurality of hook members is elastically deformable in the direction of the diameter of each guide projection 333.

The hook members provided in the end portion of the rear side of the guide projection 333 may be disposed at the rear side of the rear surface cover 310c, and regulate a forward movement of the guide projection 333. In the case where the hook members are deformed to reduce a gap between the hook members, the slider 330 may separate from the rear surface cover 310c while the end portion of the rear side of the guide projection 333 escapes from the front side of the rear surface cover 310c.

Since the slider 330 is detachably provided at the housing 310, the slider 330 may be readily separated and mounted to repair the pop-up member 360 or the fixation part 350 and to be replaced.

### [Structure speed-reduction inducing member]

The water supply device 300 of the embodiment comprises a speed-reduction inducing member 370. The speed-reduction inducing member 370 is disposed at the slider 330. The speed-reduction inducing member 370 is provided to interfere with a front-rear movement of the water tank 320 connecting to the slider 330, with respect to the slider 330.

In an example, the speed-reduction inducing member 370 may be disposed at the lateral surface frame 335. The speed-reduction inducing member 370 may interfere with a front-rear movement of the water tank 320, relative to the slider 330, while contacting the lateral surface of the water tank 320 that is inserted into the slider 330, i.e., the lateral surface of the water tank 320 that is disposed to face the lateral surface frame 335.

A pair of speed-reduction inducing members 370 are provided at the slider 330. In the embodiment, the pair of speed-reduction inducing members 370 may be spaced from each other in the lateral direction, with the water tank 320 therebetween. Each of the speed-reduction inducing members 370 may be provided at the lateral surface frame 335.

In the embodiment, the speed-reduction inducing member 370 comprises a roller, for example. Accordingly, the speed-reduction inducing member 370 may comprise a roller that is provided to rotate around an up-down axis.

The roller may be disposed at the lateral surface frame 335. Preferably, the roller may be disposed in the end portion of the front side of the lateral surface frame 335, and contact the lateral surface of the water tank 320 connecting to the slider 330. The roller may generate a frictional force that interferes with the movement of the water tank 320.

In the embodiment, a roller may be installed such that a fictional force applied between the speed-reduction inducing member 370 and the water tank 320 at a time when the water tank 320 moves may be greater than a friction force applied between the bottom surface of the water tank 320 and the bottom surface part 311 of the housing 310 at a time when the water tank 320 moves.

For example, a greater fictional force may be applied between the roller and the water tank 320 than between the bottom surface of the water tank 320 and the bottom surface part 311 of the housing 310, and a greater frictional force may be applied between a rotation axis rotatably supporting the roller and the roller than between the bottom surface of the water tank 320 and the bottom surface part 311 of the housing 310.

The speed-reduction inducing member 370 comprising the above-described roller may reduce a speed of movement of the water tank 320, while interfering with a front-rear movement of the water tank 320, relative to the slider 330, in the state where the speed-reduction inducing member 370 contacts the lateral surface of the water tank 320 closely.

In the embodiment, in the case where the slider 330 separates from the fixation part 350, in the state where the water tank 320 is disposed in the insertion position and the slider 330 is fixed by the fixation part 350, the slider 330 and the water tank 320 may be moved forward by an elastic force provided by the pop-up member 360.

At this time, the water tank 320 may be filled with water or almost empty. In most cases, the water tank 320 is drawn to fill the water tank 320 with water. Accordingly, it is highly likely that the water tank 320 is empty at a time when the water tank 320 moves to the withdrawal position.

A water tank 320 that is empty weighs much less than a water tank 320 that is filled with water. At a time when the water tank 320 that is empty moves to the withdrawal position, based on the operation of the pop-up member 360, the water tank 320 that is empty moves faster than the water tank 320 that is filled with water.

In the case where the water tank 320 moves to the withdrawal position too fast, the water tank 320 may escape forward out of the cooking appliance rapidly.

At this time, the user may be surprised by the water tank 320 escaping and injured by the water tank 320 falling downward, or the water tank 320 may be damaged.

To prevent this from happening, the elastic force of the pop-up member 360 may be reduced. However, at this time, the water tank 320 may hardly be drawn in the case where the water tank 320 is filled with water.

Considering the fact, in the embodiment, the speed of movement of the water tank 320, instead of the elastic force of the pop-up member 360, may be adjusted by the speed-reduction inducing member 370.

Accordingly, in the state where the elastic force of the pop-up member 360 remains at a sufficiently high level, the speed of movement of the water tank 320 may be adjusted properly by the speed-reduction inducing member 370, such that the water tank 320 may be drawn effectively.

Further, the speed-reduction inducing member 370 may guide the insertion of the water tank 320, at a time when the water tank 320 completely separating from the slider 330 is inserted into the slider 330.

As the lateral surface frame 335 contacts the lateral surface of the water tank 320 more closely, the water tank 320 may move in the state of contacting the slider 330 more closely. As the water tank 320 contacts the slider 330 more closely, a lateral movement of the water tank 320 may be suppressed.

In the case where the lateral movement of the water tank 320 increases while the water tank 320 moves, noise may be made due to a collision between the water tank 320 and its surrounding structure, e.g., the slider 330, the housing 310 and the like.

Additionally, in the case where the lateral movement of the water tank 320 increases while the water tank 320 moves, the water tank 320 may not be drawn properly, while moving to a position out of the input hole formed at the front panel.

Considering the fact, the lateral surface frame 335 may become close to the lateral surface of the water tank 320 sufficiently, such that the lateral movement of the water tank 320 may be suppressed, in the embodiment.

Thus, the lateral movement of the water tank 320 may be suppressed, and the generation of noise may be suppressed caused by a collision between the water tank 320 and the slider 330, the housing 310 and the like. Further, the withdrawal path of the water tank 320 may be effectively guided into the input hole formed at the front panel, such that the water tank 320 is drawn accurately and smoothly.

As a gap between the lateral surface frame 335 and the lateral surface of the water tank 320 decreases as described above, the water tank 320 separated from the slider 330 is hardly inserted into the slider 330 again.

For example, as a distance between the lateral surface frame 335 and the lateral surface of the water tank 320 decreases, the water tank 320 and the slider 330 connect properly, only when a lateral position of the water tank 320 is arranged accurately with respect to the slider 330.

If not, the water tank 320 may not connect to the slider 330 properly, the water tank 320 and the slider 330 repeat colliding, and the water tank 320 or the slider 330 may be damaged.

Further, the slider 330 inserted into the housing 310 is in a position that is hardly seen by the user, making it difficult for the user to find the position of the slider 330 and for the water tank 320 to be inserted into the slider 330 accurately.

However, in the embodiment, as long as the user pushes the water tank 320 into the housing 310 and the slider 330 in the housing, the insertion path of the water tank 320 may be guided by the speed-reduction inducing member 370.

In the embodiment, as the water tank 320 moves rearward and contacts the speed-reduction inducing member 370, the end portion of the rear side of the water tank 320 may slide along the curved surface of the roller. At this time, the end potion of the rear of the water tank 320 may move toward a space formed between the pair of speed-reduction inducing members 370, i.e., the inner space of the slider 330, and each roller in contact with the water tank 320 may rotate to allow the water tank 320 to move smoothly.

Thus, as long as the user pushes the water tank 320 into the cooking appliance regardless of the position of the slider 330, the insertion path of the water tank 320 may be guided by the speed-reduction inducing member 370, such that the water tank 320 is inserted effectively.

Preferably, the speed-reduction inducing member 320 may be made of an elastically deformable material. The speed-reduction inducing member 370 is provided to absorb an impact caused by a collision with the water tank 320, to reduce noise that may be generated while the water tank 320 is inserted, and suppressing damage to the water tank 320 or the speed-reduction inducing member 370.

### [Position sensing structure of water tank]

The water supply device 300 of the embodiment may further comprise an insertion sensing member 380. The insertion sensing member 380 may be provided to sense whether the water tank 320 is in the insertion position.

In an example, the insertion sensing member 380 may be provided in a way that the insertion sensing member 380 contacts the slider 330 and indirectly senses the position of the water tank 320.

The insertion sensing member 380 may comprise a touch switch that contacts the slider 330, specifically, the lateral surface frame 335, and sense the position of the slider 330.

At this time, in the case where the water tank 320 is in the insertion position, the insertion sensing member 380 may contact the slider 330 connecting to the water tank 320 and indirectly sense that the water tank 320 is in the insertion position.

In another example, the insertion sensing member 380 may directly contact the water tank 320 and sense the position of the water tank 320. In the case where the water tank 320 is in the insertion position, the insertion sensing member 380 may contact the end portion at the rear side of the water tank 320 and sense that the water tank 320 is in the insertion position.

In the embodiment, in the case where the water tank 320 is in the insertion position, as illustrated in FIGS. 6 and 7, the water tank nozzle 325 and the connection pipe 35 may connect to each other, making it possible to supply water to the steam generator 31.

As the water tank 320 moves toward the withdrawal position and escapes from the insertion position, the water tank nozzle 325 is decoupled from the connection pipe 35, and a supply of water to the steam generator 31 is cut off.

That is, in the case where the water tank 320 is outside the insertion position, water cannot be supplied to the steam generator 31, and in the case where the water tank 320 is in the insertion position, water can be supplied to the steam generator 31. The insertion sensing member 380 may sense whether the water tank 320 is in the insertion position, to sense whether water can be supplied to the steam generator 31.

Additionally, the steam generator 31, connecting to the water tank 320 based on a connection between the water tank nozzle 325 and the connection pipe 35, may operate only when the insertion sensing member 380 senses that the water tank 320 is in the insertion position.

Accordingly, only in the case where the insertion sensing member 380 senses that the water tank 320 is in the insertion position, that is, the water tank nozzle 325 and the connection pipe 35 connect to each other, making it possible to supply water to the steam generator 31, the steam heater 33 may operate to heat water stored in the water storage 32.

In the case where the water tank nozzle 325 and the connection pipe 35 are disconnected such that water cannot be supplied to the steam generator 31, a supply of power to the steam heater 33 may be cut off, to prevent the steam heater 33 from operating.

Thus, in the state where water cannot be supplied to the steam generator 31 and steam can hardly be generated although the steam heater 33 operates, the steam heater 33 may be prevented from operating, preventing waste of power and an accident caused by overheating of the steam heater 33.

### [Operation and effect of steam supply device]

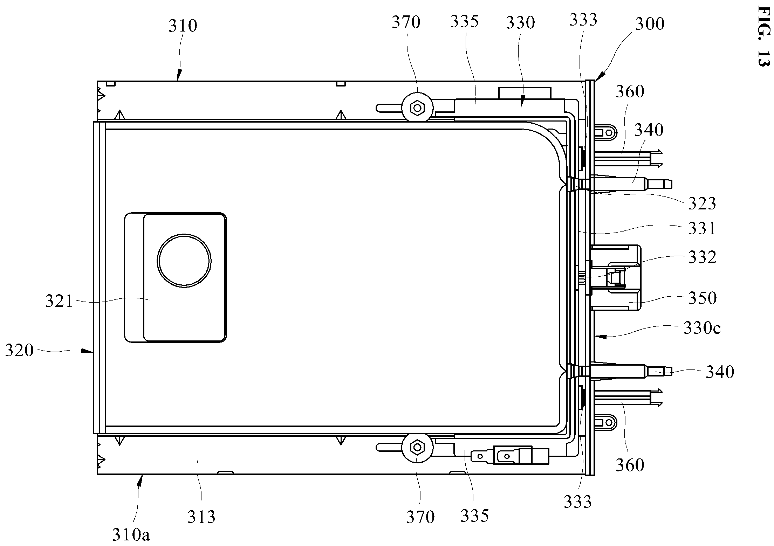

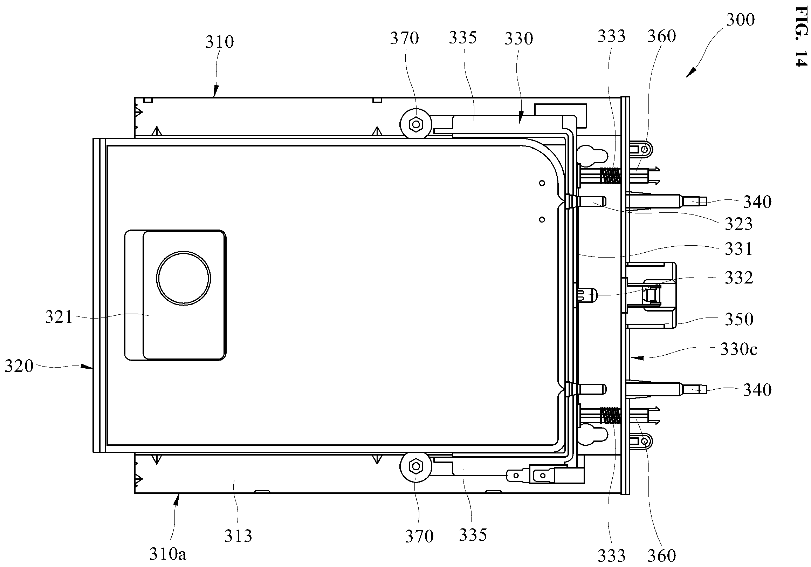

FIG. 13 is a view showing that a slider is fixed in the water supply device of FIG. 11, and FIG. 14 is a view showing that a slider separates from the water supply device of FIG. 13.

Hereafter, the operation and effect of the steam supply device of the embodiment are described with reference to FIGS. 1 to 14.

Referring to FIGS. 1 to 6, while the steam supply device 30 of the embodiment may be installed in the main body 100 of the cooking appliance, the steam generator 31 may be disposed at the lower side of the cooking compartment 101, and the water supply device 300 may be disposed at the upper side of the cooking compartment 101, i.e., installed in the electronic component compartment 103.

The water supply device 300 is provided to store and supply water to be supplied to the steam generator 31. As illustrated in FIGS. 4 to 10, the water supply device 300 is provided in a way that the water tank 320 can be drawn from the housing 310 that is installed in the main body 100.

The water tank 320 may be installed in the housing 310 in a way that the position of the water tank 320 changes to the insertion position and the withdrawal position. In the state where the water tank 320 is fixed to the insertion position, the water tank nozzle 325 and the connection pipe 35 connect to each other, making it possible to supply water to the steam generator 31. In the state where the water tank 320 is drawn to the withdrawal position, the user can put water into the water tank 320 through the input hole exposed out of the cooking appliance.

In the embodiment, the water tank 320 that is supplied with and store water to be provided to the steam generator 31, and the slider 330 that couples the water tank 320 to the housing 310 in a movable manner may be provided apart from each other. Additionally, the water supply device 300 may be provided in a way that the water supply device 300 comprises the water tank 320 and the slider 330 that connect to each other detachably.

The water tank 320 and the slider 330 may have a complex shape and structure in the case where the water tank 320 and the slider are formed integrally. However, since the water tank 320 and the slider 330 are provided individually as described above, the water tank 320 and the slider 330 may not have a complex structure and shape.

Thus, the manufacturability of the water supply device 300 may improve, and costs of manufacturing the water supply device 300 may decrease.

Further, since a component highly likely to be damaged structurally such as the slider 330 separates from the water supply device 300 readily, ease of repairs of the water supply device 300 may be ensured, repair costs of the water supply device 300 may decrease, and the separation of the water tank 320 from the housing 310 for a wash or repairs and the like may be performed readily and rapidly.

As illustrated in FIG. 11, in the case where the user pushes the water tank 320 rearward in the state where the water tank 320 is drawn to the front of the housing 310, the water tank 320 and the slider 330 move rearward.

In the case where the water tank 320 and the slider 330 move up to the insertion position of the water tank 320, the fixation projection 332 being provided and protruding at the rear side of the slider 330, and the fixation part 350 being installed in the housing 310 may be coupled, and the water tank 320 may be fixed onto/into the housing 310 such that the water tank 320 may remain in the insertion position, as illustrated in FIG. 13.

In the case where the water tank 320 is in the insertion position as described above, the water tank nozzle 325 and the connection pipe 35 (see FIG. 6) connect to each other, making it possible to supply water to the steam generator 31 (see FIG. 6). The insertion sensing member 380 installed in the hosing 310 may sense whether the water tank 320 is in the insertion position.

In the embodiment, in the case where the insertion sensing member 380 senses that the water tank 320 is in the insertion position, that is, only in the case where the water tank nozzle 325 and the connection pipe 35 connect to each other, making it possible to supply water to the steam generator 31, the steam heater 33 may operate to heat water stored in the water storage 32.

In the case where the water tank nozzle 325 and the connection pipe 35 disconnect, making it impossible to supply water to the steam generator 31, a supply of power to the steam heater 33 is cut off to prevent the steam heater 33 from operating.

Thus, the cooking appliance may block the steam heater 33 from operating unnecessarily in the state where water cannot be supplied to the steam generator 31 and steam can hardly be generated although the steam heater 33 (see FIG. 6) operates. The cooking appliance may prevent waste of power and an accident caused by overheating of the steam heater 33.

In the case where the user manipulates the cooking appliance to enable an operation in relation to steam cooking in the state where the water supply device 300 connects to the steam generator 31, water flowing from the water supply device 300 into the water storage 32 is heated by the steam heater 33 to generate steam. The generated steam may flow into the cooking compartment 101 though the steam pipe 38, and the steam having flown into the cooking compartment 101 may be used to cook in the cooking compartment 101 while circulating in the cooking compartment 101.

Further, the water tank 320 needs to be withdrawn to compensate for a water loss, wash itself or clean and repair the water supply device 300 and the like. In the embodiment, the water tank 320 is withdrawn based on a press of the front surface of the water tank 320, for example.

For example, in the case where the user presses the front surface of the water tank 320 in the state where the fixation projection 332 is coupled to the fixation part 350, the fixation projection 332 and the fixation part 350 may be decoupled as illustrated in FIG. 14.

As the fixation projection 332 and the fixation part 350 are decoupled as described above, the elastic force of the pop-up member 360 pressed acts as power of moving the slider 330 forward.

Accordingly, the slider 330 moves forward, and the water tank 320 connecting to the slider 330 moves forward toward the withdrawal position, together with the slider 330.

As the slider 330 moving forward stops, power of moving the water tank 320 forward stops acting, and the water tank 320 is affected only by the speed-reduction inducing member 370.

The speed-reduction inducing member 370 provides resistance against the forward movement of the water tank 320, thereby reducing a speed of forward movement of the water tank 320. The speed-reduction inducing member 370 may control movement of the water tank 320 to prevent the water tank 320 from escaping rapidly from the front of the cooking appliance, as well as controlling movement of the water tank 320 to draw the water tank 320 smoothly.

In the water supply device 300 of the embodiment, and the steam supply device 30 and the cooking appliance with the water supply device 300, one water supply device 300 may provide a variety of functions comprising a function of fixing the water tank 320 to the inside of the main body 100 or drawing the water tank 320 from the main body 100 simply based on a press, a function of controlling the operation of the steam supply device 30 depending on the position of the water tank 320, a function of providing a smooth touch to allow the water tank 320 to be drawn smoothly and the like.

The cooking appliance of the embodiment with the water supply device 300 may provide improved user convenience to the user.

In the water supply device 300 of the embodiment, the water tank 320 and the slider 330 may be provided as an individual component in a way that the water tank 320 and the slider 330 connect in a separable manner, and the water tank 320 may be installed in the housing 310 through the slider 330 in a movable manner.

The water supply device 300 may ensure a decrease in the manufacturing costs of the water supply device 300 and improvement in the manufacturability of the water supply device 300, ensure ease of repairs of the water supply device 300 and a decrease in the repair costs of the water supply device 300, and ensure ease of the separation of the water tank 320 for a wash or repairs and the like.

The cooking appliance of the embodiment may prevent the steam heater from operating unnecessarily in the state where water cannot be supplied, preventing waste of power and an accident caused by overheating of the steam heater.

### [Description of Reference Numerals]

100: Main body
101: Cooking compartment
103: Electronic component compartment
110: Cavity
120: First front panel
130: Second front panel
140: Upper panel
150: Door
155: Handle
170: Fan module
200: Control panel
30: Steam supply device
31: Steam generator
32: Water storage
33: Steam heater
35: Connection pipe
36: Pump
38: Steam pipe
39: Stem spray member
300: Water supply device
310: Housing
310a: First housing
310b: Second housing
310c: Rear surface cover
311: Bottom surface part
312: First lateral surface part
313: First guide surface part
313a: Rail projection
314: First coupling surface part
315: Upper surface part
316: Second lateral surface part
317: Second guide surface part
318: Second coupling surface part
320: Water tank
321: Lid
323: First sliding projection
325: Water tank nozzle
330: Slider
331: Rear surface frame
332: Fixation projection
333: Guide projection
335: Lateral surface frame
336: Second sliding projection
340: Tube supporter
350: Fixation part
360: Pop-up member
370: Speed-reduction inducing member
380: Insertion sensing member

## Claims

1. A water supply device, comprising:
a housing (310) having a front surface that is open;
a slider (330) being accommodated in the housing (310) in a way that the slider (330) is movable in a front-rear direction;
a water tank (320) being installed in the housing (310) in a way that the water tank (320) comes in and out of the housing in the front-rear direction, and connecting to the slider (330) that moves forward to move forward together with the slider (330);
a fixation part (350) fixing the slider (330) to prevent the slider (330) from moving forward, and
wherein the water tank (320) is provided apart from the slider (330) in a way that the water tank (320) is movable in the front-rear direction, relative to the slider (330),
at least a portion of the water tank (320) is inserted into the slider (330), such that the water tank (320) connects to the slider (330), **characterized by** a speed-reduction inducing member (370) interfering with a front-rear movement of the water tank (320) that connects to the slider (330), relative to the slider (330), the speed-reduction inducing member (370) is disposed at the slider (330), closely contacts the water tank (320) being inserted into the slider (330), and generates a frictional force interfering with movement of the water tank (320), relative to the slider (330), and
the speed-reduction inducing member (370) comprises a pair of rollers that is spaced from each other in a lateral direction with the water tank (320) therebetween,
wherein each roller is disposed at the slider (330) in a rotatable manner, around an up-down axis, and closely contacts a lateral surface of the water tank (320) connecting to the slider (330).

2. The water supply device of claim 1, wherein the slider (330) comprises a rear surface frame (331) being disposed behind the water tank (320), and
the rear surface frame (331) and a rear surface of the water tank (320) are disposed to touch each other in the font-rear direction.

3. The water supply device of claim 2, wherein as the slider (330) moves forward, the rear surface frame (331) pushes and moves the water tank (320) forward, and
as the water tank (320) moves rearward, the water tank (320) pushes and moves the rear surface frame (331) rearward.

4. The water supply device of any one of the preceding claims 1 to 3, wherein the slider (330) further comprises a pair of lateral surface frames (335) respectively extending forward from the rear surface frame (331) and being respectively disposed to face a lateral surface of the water tank (320), and
at least a portion of the water tank (320) is inserted into a space being surrounded by the rear surface frame (331) and the pair of lateral surface frames (335).

5. The water supply device of claim 4, the housing (310) comprising:
a bottom surface part (311) being disposed under the water tank (320);
a lateral surface part (312, 316) extending upward from the bottom surface part (311) and being disposed beside the water tank (320); and
a guide surface part (313, 317) extending in a direction where the guide surface part (313, 317) becomes far from the bottom surface part (311) and being disposed on the bottom surface part (311), while extending from the lateral surface part (312, 316) in a lateral direction,
wherein the guide surface part (313, 317) supports the lateral surface frame (335) under the slider (330), in a way that the lateral surface frame (335) is movable in the front-rear direction.

6. The water supply device of any one of the preceding claims 1 to 5, wherein the slider (330) comprises a fixation projection (332) protruding to rearward from the rear surface frame (331), and
the fixation part (350) is disposed behind the slider (330) and coupled to the fixation projection (332).

7. The water supply device of any one of the preceding claims 1 to 6, wherein the water supply device (300) further comprises a pop-up member (360) providing power for moving the slider (330), which is separated from the fixation part (350), forward.

8. The water supply device of claim 7, wherein the housing (310) comprises a rear surface cover (310c) being disposed behind the slider (330), and
the pop-up member (360) is disposed between the slider (330) and the rear surface cover (310c), and elastically supports the slider (330) behind the slider (330).

9. The water supply device of claim 8, wherein the slider (330) comprises a guide projection (333) protruding to rearward from the rear surface frame (331),
the pop-up member (360) comprises a coil spring being provided in a way that the pop-up member (350) is elastically deformable in the front-rear direction and being disposed between the rear surface cover (310c) and the rear surface frame (331), and
the guide projection (333) is fitted into the coil spring while passing through the coil spring in the front-rear direction.

10. The water supply device of any one of the preceding claims 1 to 7, wherein the housing (310) comprises a rear surface cover (310c) being disposed behind the slider (330),
the slider (330) comprises a rear surface frame (331) being disposed behind the water tank (320), and a guide projection (333) protruding rearward from the rear surface frame (331), and
the guide projection (333) is coupled to the housing (310) in a way that the guide projection (333) is movable in the front-rear direction, while passing through the rear surface cover (310c) in the front-rear direction.

11. A steam supply device (30), comprising:
a steam generator (31) configured to operate to heat water and generate steam; and
the water supply device (300) of any one of claims 1 to 10 for supplying water to be supplied to the steam generator (31).

12. A cooking appliance, comprising:
a main body (100) having a cooking compartment (101) therein; and
the steam supply device (30) of claim 11 being installed in the main body (100) and for supplying steam into the cooking compartment (101).

## Patentansprüche

1. Wasserversorgungsvorrichtung, aufweisend:
ein Gehäuse (310) mit einer offenen Vorderseite;
einen Schieber (330), der in dem Gehäuse (310) so aufgenommen ist, dass der Schieber (330) in einer Vorwärts-Rückwärts-Richtung bewegbar ist;
einen Wassertank (320), der in dem Gehäuse (310) so angebracht ist, dass der Wassertank (320) in Vorwärts-Rückwärts-Richtung in das Gehäuse hinein- und herausbewegt werden kann, und der mit dem Schieber (330) verbunden ist, der sich nach vorne bewegt, um sich zusammen mit dem Schieber (330) nach vorne zu bewegen; und
ein Befestigungsteil (350), das den Schieber (330) fixiert, um den Schieber (330) daran zu hindern, sich nach vorne zu bewegen,
wobei der Wassertank (320) getrennt von dem Schieber (330) so vorgesehen ist, dass der Wassertank (320) in Vorwärts-Rückwärts-Richtung relativ zu dem Schieber (330) bewegbar ist,
wobei zumindest ein Teil des Wassertanks (320) in den Schieber (330) eingesetzt ist, so dass der Wassertank (320) mit dem Schieber (330) verbunden ist,
**gekennzeichnet durch** ein eine Geschwindigkeitsverringerung induzierendes Element (370), das eine Bewegung des mit dem Schieber (330) verbundenen Wassertanks (320) nach vorne und hinten relativ zu dem Schieber (330) behindert,
das die Geschwindigkeitsreduzierung induzierende Element (370) an dem Schieber (330) angeordnet ist, in engem Kontakt mit dem in den Schieber (330) eingesetzten Wassertank (320) steht und eine Reibungskraft erzeugt, die die Bewegung des Wassertanks (320) relativ zu dem Schieber (330) behindert, und
das die Geschwindigkeitsreduzierung induzierende Element (370) ein Paar Rollen aufweist, die in seitlicher Richtung voneinander beabstandet sind, wobei sich der Wassertank (320) dazwischen befindet,
wobei jede Rolle an dem Schieber (330) um eine vertikale Achse drehbar angeordnet ist und in engem Kontakt mit einer Seitenfläche des mit dem Schieber (330) verbundenen Wassertanks (320) steht.

2. Wasserversorgungsvorrichtung nach Anspruch 1, wobei der Schieber (330) einen Rückseitenrahmen (331) aufweist, der hinter dem Wassertank (320) angeordnet ist, und
der Rückseitenrahmen (331) und eine Rückseite des Wassertanks (320) so angeordnet sind, dass sie sich in Vorwärts-Rückwärts-Richtung berühren.

3. Wasserversorgungsvorrichtung nach Anspruch 2, wobei dann, wenn sich der Schieber (330) nach vorne bewegt, der Rückseitenrahmen (331) den Wassertank (320) nach vorne drückt und bewegt, und
wenn sich der Wassertank (320) nach hinten bewegt, der Wassertank (320) den Rückseitenrahmen (331) nach hinten drückt und bewegt.

4. Wasserversorgungsvorrichtung nach einem der vorhergehenden Ansprüche 1 bis 3, wobei der Schieber (330) ferner ein Paar von Seitenflächenrahmen (335) umfasst, die sich jeweils von dem Rückseitenrahmen (331) nach vorne erstrecken und jeweils so angeordnet sind, dass sie einer Seitenfläche des Wassertanks (320) gegenüberliegen, und
zumindest ein Teil des Wassertanks (320) in einen Raum eingesetzt ist, der von dem Rückseitenrahmen (331) und dem Paar von Seitenflächenrahmen (335) umgeben ist.

5. Wasserversorgungsvorrichtung nach Anspruch 4, wobei das Gehäuse (310) umfasst:
ein Bodenflächenteil (311), das unter dem Wassertank (320) angeordnet ist;
ein Seitenflächenteil (312, 316), das sich von dem Bodenflächenteil (311) nach oben erstreckt und neben dem Wassertank (320) angeordnet ist; und
ein Führungsflächenteil (313, 317), das sich in einer Richtung erstreckt, in der das Führungsflächenteil (313, 317) von dem Bodenflächenteil (311) wegführt, und das auf dem Bodenflächenteil (311) angeordnet ist, während es sich von dem Seitenflächenteil (312, 316) in einer seitlichen Richtung erstreckt,
wobei das Führungsflächenteil (313, 317) den Seitenflächenrahmen (335) unter dem Schieber (330) so lagert, dass der Seitenflächenrahmen (335) in der Vorwärts-Rückwärts-Richtung bewegbar ist.

6. Wasserversorgungsvorrichtung nach einem der vorhergehenden Ansprüche 1 bis 5, wobei der Schieber (330) einen Befestigungsvorsprung (332) aufweist, der von dem Rückseitenrahmen (331) nach hinten abragt, und
das Befestigungsteil (350) hinter dem Schieber (330) angeordnet und mit dem Befestigungsvorsprung (332) gekoppelt ist.

7. Wasserversorgungsvorrichtung nach einem der vorangehenden Ansprüche 1 bis 6, wobei die Wasserversorgungsvorrichtung (300) ferner ein Aufklappelement (360) umfasst, das eine Kraft zum Vorwärtsbewegen des Schiebers (330) bereitstellt, der von dem Befestigungsteil (350) getrennt ist.

8. Wasserversorgungsvorrichtung nach Anspruch 7, wobei das Gehäuse (310) eine hinter dem Schieber (330) angeordnete Rückseitenabdeckung (310c) aufweist, und
das Aufklappelement (360) zwischen dem Schieber (330) und der Rückseitenabdeckung (310c) angeordnet ist und hinter dem Schieber (330) für eine elastische Lagerung des Schiebers (330) sorgt.

9. Wasserversorgungsvorrichtung nach Anspruch 8, wobei der Schieber (330) einen Führungsvorsprung (333) aufweist, der von dem Rückseitenrahmen (331) nach hinten abragt,
wobei das Aufklappelement (360) eine Schraubenfeder aufweist, die so vorgesehen ist, dass das Aufklappelement (360) in der Vorwärts-Rückwärts-Richtung elastisch verformbar und zwischen der Rückseitenabdeckung (310c) und dem Rückseitenrahmen (331) angeordnet ist, und
wobei der Führungsvorsprung (333) in die Schraubenfeder eingepasst ist, wenn er in Vorwärts-Rückwärts-Richtung durch die Schraubenfeder hindurchgeführt ist.

10. Wasserversorgungsvorrichtung nach einem der vorhergehenden Ansprüche 1 bis 7, wobei das Gehäuse (310) eine hinter dem Schieber (330) angeordnete Rückseitenabdeckung (310c) aufweist,
wobei der Schieber (330) einen Rückseitenrahmen (331), der hinter dem Wassertank (320) angeordnet ist, und einen Führungsvorsprung (333) aufweist, der von dem Rückseitenrahmen (331) nach hinten abragt, und
wobei der Führungsvorsprung (333) mit dem Gehäuse (310) so gekoppelt ist, dass der Führungsvorsprung (333) in Vorwärts-Rückwärts-Richtung bewegbar ist, wenn er in Vorwärts-Rückwärts-Richtung durch die Rückseitenabdeckung (310c) hindurchgeführt ist.

11. Dampfversorgungsvorrichtung (30), aufweisend:
einen Dampferzeuger (31), der dazu ausgelegt ist, im Betrieb Wasser zu erhitzen und Dampf zu erzeugen; und
die Wasserversorgungsvorrichtung (300) nach einem der Ansprüche 1 bis 10 zum Zuführen von Wasser, das dem Dampferzeuger (31) zugeführt werden soll.

12. Kochgerät, aufweisend:
einen Hauptkörper (100) mit einem darin ausgebildeten Garraum (101); und
die Dampfversorgungsvorrichtung (30) nach Anspruch 11, die in dem Hauptkörper (100) angebracht ist und zum Zuführen von Dampf in den Garraum (101) dient.

## Revendications

1. Dispositif d'alimentation en eau comprenant :
un boîtier (310) présentant une surface avant qui est ouverte ;
un coulisseau (330) logé dans le boîtier (310) de telle manière que le coulisseau (330) peut être déplacé dans une direction avant-arrière ;
un réservoir d'eau (320) installé dans le boîtier (310) de telle manière que le réservoir d'eau (320) entre dans le boîtier et en sort dans la direction avant-arrière, et se raccordant au coulisseau (330) qui se déplace vers l'avant pour se déplacer vers l'avant conjointement avec le coulisseau (330) ; et
une partie de fixation (350) fixant le coulisseau (330) pour empêcher le coulisseau (330) de se déplacer vers l'avant,
dans lequel le réservoir d'eau (320) est prévu à l'écart du coulisseau (330) de telle manière que le réservoir d'eau (320) peut être déplacé dans la direction avant-arrière, par rapport au coulisseau (330),
au moins une partie du réservoir d'eau (320) est insérée dans le coulisseau (330) de telle sorte que le réservoir d'eau (320) se raccorde au coulisseau (330),
**caractérisé par** un élément d'induction de réduction de vitesse (370) interférant avec un déplacement avant-arrière du réservoir d'eau (320), qui se raccorde au coulisseau (330), par rapport au coulisseau (330),
l'élément d'induction de réduction de vitesse (370) est disposé sur le coulisseau (330), vient en contact étroit avec le réservoir d'eau (320) inséré dans le coulisseau (330), et génère une force de frottement interférant avec le déplacement du réservoir d'eau (320), par rapport au coulisseau (330), et
l'élément d'induction de réduction de vitesse (370) comprend une paire de rouleaux qui sont espacés l'un de l'autre dans une direction latérale avec le réservoir d'eau (320) entre eux, et
dans lequel chaque rouleau est disposé sur le coulisseau (330) d'une manière rotative, autour d'un axe haut-bas, et vient en contact étroit avec une surface latérale du réservoir d'eau (320) se raccordant au coulisseau (330).

2. Dispositif d'alimentation en eau selon la revendication 1, dans lequel le coulisseau (330) comprend un cadre de surface arrière (331) qui est disposé derrière le réservoir d'eau (320), et
le cadre de surface arrière (331) et une surface arrière du réservoir d'eau (320) sont disposés pour se toucher l'un l'autre dans la direction avant-arrière.

3. Dispositif d'alimentation en eau selon la revendication 2, dans lequel lorsque le coulisseau (330) se déplace vers l'avant, le cadre de surface arrière (331) pousse et déplace le réservoir d'eau (320) vers l'avant, et
lorsque le réservoir d'eau (320) se déplace vers l'arrière, le réservoir d'eau (320) pousse et déplace le cadre de surface arrière (331) vers l'arrière.

4. Dispositif d'alimentation en eau selon l'une quelconque des revendications précédentes 1 à 3, dans lequel le coulisseau (330) comprend en outre une paire de cadres de surface latérale (335) s'étendant respectivement vers l'avant depuis le cadre de surface arrière (331) et respectivement disposés pour faire face à une surface latérale du réservoir d'eau (320), et
au moins une partie du réservoir d'eau (320) est insérée dans un espace entouré par le cadre de surface arrière (331) et la paire de cadres de surface latérale (335).

5. Dispositif d'alimentation en eau selon la revendication 4, le boîtier (310) comprenant :
une partie de surface inférieure (311) disposée sous le réservoir d'eau (320) ;
une partie de surface latérale (312, 316) s'étendant vers le haut à partir de la partie de surface inférieure (311) et disposée à côté du réservoir d'eau (320) ; et
une partie de surface de guidage (313, 317) s'étendant dans une direction où la partie de surface de guidage (313, 317) s'éloigne de la partie de surface inférieure (311) et étant disposée sur la partie de surface inférieure (311), tout en s'étendant depuis la partie de surface latérale (312, 316) dans une direction latérale,
dans lequel la partie de surface de guidage (313, 317) supporte le cadre de surface latérale (335) sous le coulisseau (330) de telle manière que le cadre de surface latérale (335) peut être déplacé dans la direction avant-arrière.

6. Dispositif d'alimentation en eau selon l'une quelconque des revendications précédentes 1 à 5, dans lequel le coulisseau (330) comprend une saillie de fixation (332) faisant saillie vers l'arrière à partir du cadre de surface arrière (331), et
la partie de fixation (350) est disposée derrière le coulisseau (330) et est couplée à la saillie de fixation (332).

7. Dispositif d'alimentation en eau selon l'une quelconque des revendications 1 à 6, dans lequel le dispositif d'alimentation en eau (300) comprend en outre un élément escamotable (360) fournissant de l'énergie pour déplacer le coulisseau (330), qui est séparé de la partie de fixation (350), vers l'avant.

8. Dispositif d'alimentation en eau selon la revendication 7, dans lequel le boîtier (310) comprend un couvercle de surface arrière (310c) disposé derrière le coulisseau (330), et
l'élément escamotable (360) est disposé entre le coulisseau (330) et le couvercle de surface arrière (310c), et supporte élastiquement le coulisseau (330) derrière le coulisseau (330).

9. Dispositif d'alimentation en eau selon la revendication 8, dans lequel le coulisseau (330) comprend une saillie de guidage (333) faisant saillie vers l'arrière à partir du cadre de surface arrière (331),
l'élément escamotable (360) comprend un ressort hélicoïdal prévu de telle manière que l'élément escamotable (360) est élastiquement déformable dans la direction avant-arrière et est disposé entre le couvercle de surface arrière (310c) et le cadre de surface arrière (331), et
la saillie de guidage (333) est ajustée dans le ressort hélicoïdal tout en passant à travers le ressort hélicoïdal dans la direction avant-arrière.

10. Dispositif d'alimentation en eau selon l'une quelconque des revendications 1 à 7, dans lequel le boîtier (310) comprend un couvercle de surface arrière (310c) disposé derrière le coulisseau (330),
le coulisseau (330) comprend un cadre de surface arrière (331) disposé derrière le réservoir d'eau (320), et une saillie de guidage (333) faisant saillie vers l'arrière depuis le cadre de surface arrière (331), et
la saillie de guidage (333) est couplée au boîtier (310) de telle manière que la saillie de guidage (333) peut être déplacée dans la direction avant-arrière, tout en passant à travers le couvercle de surface arrière (310c) dans la direction avant-arrière.

11. Dispositif d'alimentation en vapeur (30), comprenant :
un générateur de vapeur (31) configuré pour fonctionner pour chauffer de l'eau et générer de la vapeur ; et
le dispositif d'alimentation en eau (300) selon l'une quelconque des revendications 1 à 10 pour fournir de l'eau à fournir au générateur de vapeur (31).

12. Appareil de cuisson, comprenant :
un corps principal (100) présentant un compartiment de cuisson (101) à l'intérieur ; et
le dispositif d'alimentation en vapeur (30) selon la revendication 11, installé dans le corps principal (100) et destiné à fournir de la vapeur dans le compartiment de cuisson (101).
